# EUROPEAN PATENT SPECIFICATION

(11) **EP 3 713 246 B1**
(45) Date of publication and mention of the grant of the patent: **08.11.2023**
(21) Application number: 19220198.6
(22) Date of filing: 10.12.2015
(51) Int. Cl.: H04N 21/433, H04N 21/262, H04N 21/24, H04N 21/442, H04N 21/637

(54) **MULTIMEDIA PROCESSING APPARATUS, MULTIMEDIA PROCESSING SERVER, AND METHODS APPLIED THERETO**
MULTIMEDIAVERARBEITUNGSVORRICHTUNG, MULTIMEDIAVERARBEITUNGSSERVER UND VERFAHREN DAFÜR
DISPOSITIF DE TRAITEMENT MULTIMÉDIA, SERVEUR DE TRAITEMENT MULTIMÉDIA, ET LEUR PROCÉDÉS

(30) Priority: 31.12.2014 CN 201410855428
(43) Date of publication of application: 23.09.2020
(62) Divisional of application: 15875067.9
(73) Proprietor: HUAWEI TECHNOLOGIES CO., LTD., Shenzhen, Guangdong 518129 (CN)
(72) Inventor: HUANG, Yongjing, Shenzhen, Guangdong 518129, P.R. (CN)
(74) Representative: Gill Jennings & Every LLP

(56) References cited:
- CN-A- 103 929 671
- US-A1- 2008 192 820
- US-A1- 2009 310 944

## Description

This application claims priority to Chinese Patent Application No. 201410855428.4, filed with the Chinese Patent Office on December 31, 2014 and entitled "MULTIMEDIA PROCESSING APPARATUS, MULTIMEDIA PROCESSING SERVER, AND METHODS APPLIED THERETO".

### TECHNICAL FIELD

The present invention relates to the field of communications technologies, and in particular, to a multimedia processing method, apparatus, and server.

### BACKGROUND

With maturity of various terminal devices and the Internet, applications of the various terminal devices and the Internet emerge accordingly. What affects daily life of people most is that a server of an operator can provide various multimedia content to a terminal device of a user by means of the Internet, and the user can also request desired multimedia content from the server by using the terminal device.

For example, in a hybrid video (Hybrid Video) system, an operator may have a server for providing video content, and a user may have multiple terminal devices, including: a personal video record set-top box (Personal Video Record Set-top Box, PVR STB) with a hard disk, a non-personal video record set-top box (non-PVR STB) without a hard disk or with an embedded hard disk that is disabled, and a telephone, a tablet, and a computer, (collectively referred to as Over the Top client, OTT client), and the like.

The user may browse a channel provided by the server and perform video on demand (Video on Demand, VOD) on the OTT client or the non-PVR STB, or may select a channel to create a remote recording (referred to as remote PVR, remote Personal Video Record, or referred to as remote cPVR, remote Client Personal Video Record) task by using the hard disk of the PVR STB, to record, in the hard disk of the PVR STB, some programs of the channel provided by the server.

According to requirements of *Voluntary Industry Agreement to improve the energy consumption of Complex Set Top Boxes within the EU* in Europe, in a hybrid video system, if a PVR STB is inactive for a long time, the PVR STB is to enter a standby mode. In this case, a CPU of the PVR STB stops running, a memory of the PVR STB does not perform temporary buffering, and the PVR STB is disconnected from a network, to save energy.

However, after the PVR STB enters the standby mode, for the remote recording task already created by the user in the PVR STB, a program cannot be normally recorded (that is, the PVR STB cannot automatically wake up based on the task). In addition, in this case, the non-PVR STB or the OTT client cannot enable the PVR STB to execute the remote recording task by using the server, and the non-PVR STB or the OTT client cannot play content recorded in the PVR STB either, thereby greatly lowering utilization and efficiency of the PVR STB, or even the entire hybrid video system. CN103929671A describes a set top box timing recording method and system. The method includes the steps that when a set top box in a true standby state is awakened, the set top box communicates with a remote controller; whether new timing recording setting commands sent by users are received from the remote controller or not is judged, if yes, the timing recording function is modified according to the new timing recording setting commands, and if not, the timing recoding function is executed according to initial setting.
US2009/310944A 1 describes a system including a head-end encoder configured to stream a television program to an intermediate server operably coupled to the head end encoder at a first bit rate; and a user device operably coupled to the intermediate server; wherein the intermediate server is configured to selectively stream the television program to the user device at less than the first bit rate. US2008/192820A1 describes apparatus and methods for handling situations where requested services require more network capacity than presently available, and notifying network users of an delay in providing such services.

### SUMMARY

An objective of the present invention is to enable a created or a to-be-created remote task to still normally operate when a multimedia processing apparatus enters a standby mode.

According to a first aspect of the present invention there is provided a multimedia processing method according to claim 1.

According to a second aspect of the present invention there is provided a multimedia processing method applied to a multimedia processing server according to claim 2.

According to a third aspect of the present invention there is provided a multimedia processing apparatus according to claim 3.

According to a fourth aspect of the present invention there is provided a multimedia processing server according to claim 4.

### BRIEF DESCRIPTION OF DRAWINGS

To describe the technical solutions in the embodiments of the present invention more clearly, the following briefly describes the accompanying drawings required for describing the embodiments.
FIG. 1 is a schematic structural diagram of a multimedia system according to an embodiment of the present invention;
FIG. 2 is a flowchart of signaling of a multimedia system according to a first embodiment of the present invention;
FIG. 3 is a schematic structural diagram of a multimedia system according to a first embodiment of the present invention;
FIG. 4 to FIG. 8 are a flowchart of a multimedia processing method according to a second embodiment;
FIG. 9 is a flowchart of signaling of a multimedia system according to a third embodiment;
FIG. 10 is a schematic structural diagram of a multimedia system according to a third embodiment;
FIG. 11 to FIG. 14 are a flowchart of a multimedia processing method according to a fourth embodiment;
FIG. 15 is a flowchart of signaling of a multimedia system according to a fifth embodiment;
FIG. 16 is a schematic structural diagram of a multimedia system according to a fifth embodiment;
FIG. 17 is a flowchart of signaling of a multimedia system provided in an example according to a fifth embodiment;
FIG. 18 is a flowchart of a multimedia processing method according to a sixth embodiment;
FIG. 19 is a flowchart of a multimedia processing method provided in an example according to a sixth embodiment; and
FIG. 20 is a schematic structural diagram of hardware of a multimedia processing apparatus.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

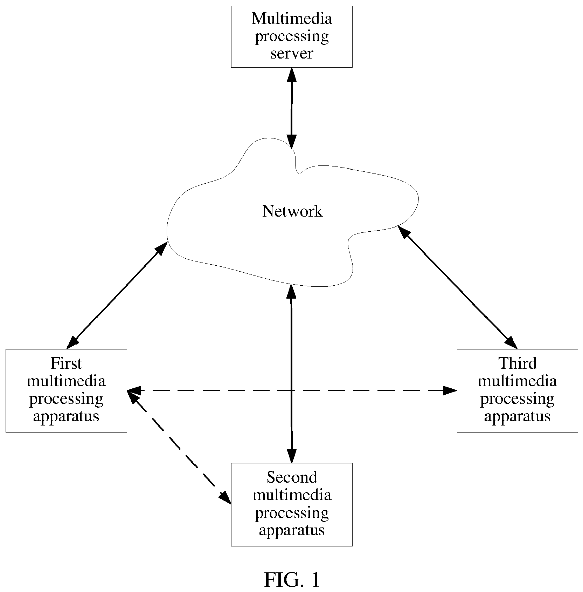

Refer to FIG. 1, which shows a schematic structural diagram of a multimedia system applicable to an embodiment of the present invention. The multimedia system includes a first multimedia processing apparatus, a second multimedia processing apparatus, a third multimedia processing apparatus, and a multimedia processing server. Specifically, the multimedia system may be a hybrid video system. The first multimedia processing apparatus may be a non-PVR STB in the hybrid video system. The second multimedia processing apparatus may be a PVR STB in the hybrid video system and optionally supports a Wake-on-LAN (Wake on LAN, WOL) function. The third multimedia processing apparatus may be an OTT client. The multimedia processing server may be a server in the hybrid video system and stores content (for example, a video) provided for the first multimedia processing apparatus, the second multimedia processing apparatus, and the third multimedia processing apparatus.

The first multimedia processing apparatus, the second multimedia processing apparatus, and the third multimedia processing apparatus can communicate with the multimedia processing server by means of a network (as shown by using solid-line arrow symbols in FIG. 1). The first multimedia processing apparatus and the third multimedia processing apparatus may set a remote task in the multimedia processing server, so that the second multimedia processing apparatus executes, after acquiring a remote task from the multimedia processing server, the remote task. For example, the second multimedia processing apparatus supports a Wake-on-LAN function. The first multimedia processing apparatus can wake up the second multimedia processing apparatus by sending a Wake-on-LAN message by means of the network. Alternatively, the first multimedia processing apparatus can send a Wake-on-LAN message to wake up the second multimedia processing apparatus (as shown by using dashed-line arrow symbols in FIG. 1) in a point-to-point manner instead of by means of the network. The third multimedia processing apparatus can instruct, by means of the network, the first multimedia processing apparatus to wake up the second multimedia processing apparatus. Alternatively, the third multimedia processing apparatus can instruct the first multimedia processing apparatus to wake up the second multimedia processing apparatus in a point-to-point manner instead of by means of the network (as shown by using dashed-line arrow symbols in FIG. 1).

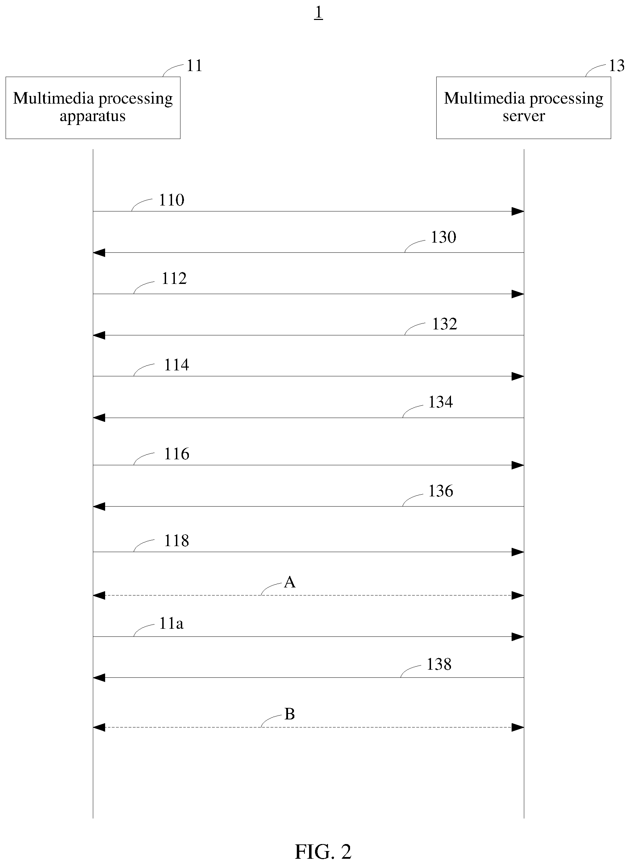

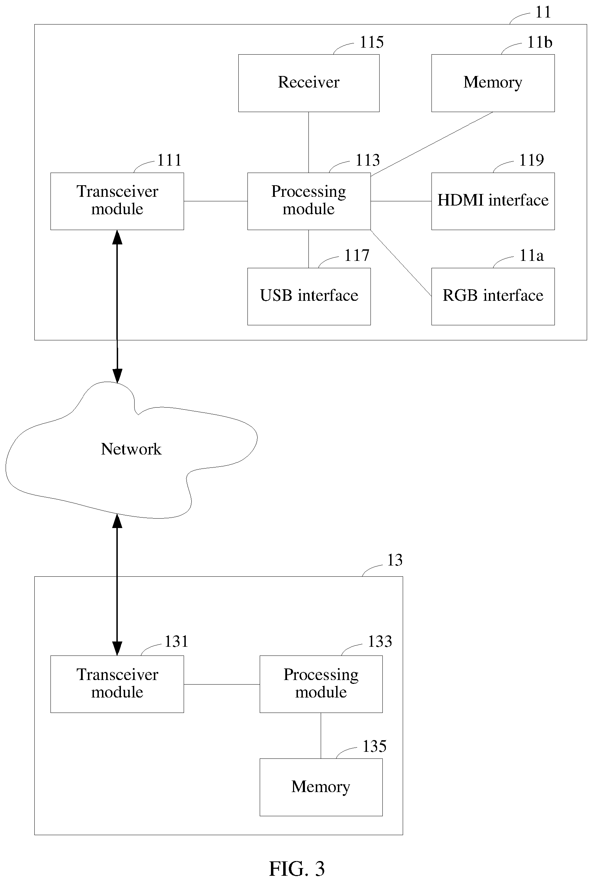

The following describes the present invention in detail. Referring to FIG. 2 and FIG. 3 together, FIG. 2 shows a flowchart of signaling of a multimedia system 1 according to a first embodiment of the present invention. The multimedia system 1 includes a multimedia processing apparatus 11 and a multimedia processing server 13. The multimedia processing apparatus 11 is connected to the multimedia processing server 13 by means of the Internet, to receive data from or send data to the multimedia processing server 13. The multimedia processing server 13 is also connected to the multimedia processing apparatus 11 by means of the Internet, to receive data from or send data to the multimedia processing apparatus 11.

FIG. 3 shows a schematic structural diagram of a multimedia system 1. A multimedia processing apparatus 11 includes a transceiver module 111, a processing module 113, an infrared receiver 115, a Universal Serial Bus (USB, Universal Serial Bus) interface 117, a high definition multimedia interface (HDMI, High Definition Multimedia Interface) 119, a red green blue interface (RGB, Red Green Blue) 11a, and a memory 11b. The transceiver module 111, the infrared receiver 115, the USB interface 117, the HDMI interface 119, the RGB interface 11a, and the memory 11b are coupled to the processing module 113. The infrared receiver 115 is configured to receive infrared input (for example, input of an infrared remote controller). The USB interface 117 is connected to an external device having a USB interface (for example, a USB hard disk). The HDMI interface 119 and the RGB interface 11a may be configured to output HDMI and RGB signals to an external device (for example, a television). The memory 11 may be configured to store a material (for example, a video recorded from the multimedia processing server 13). The transceiver module 111 and the processing module 113 are described below. Further, as shown in FIG. 3, the multimedia processing server 13 includes a transceiver module 131, a processing module 133, and a memory 135. The memory 135 is configured to store a material (for example, a video or a remote task list and management information that are mentioned below). The transceiver module 131 and the processing module 133 are described below.

The following continues to describe functions of the multimedia processing apparatus 11 and the multimedia processing server 13 in the multimedia system 1. To make this embodiment more easily comprehensible, the following provides a description by using a hybrid video system as an example. That is, the hybrid video system may be considered as the multimedia system 1, the multimedia processing apparatus 11 may be considered as a PVR STB in the hybrid video system, and the multimedia processing server 13 may be considered as a server in the hybrid video system, and stores at least video content or a program.

Generally, the multimedia processing apparatus 11 may have a normal (Active) mode and a standby mode. The standby mode may be divided into three different standby modes: fake standby (standby), network standby (network standby), and real standby (sleep). The modes are described below:

The normal mode: The multimedia processing apparatus 11 is in normal network connection, and can normally communicate with the multimedia processing server 13. A CPU of the multimedia processing apparatus 11 normally runs.

The fake standby mode: The multimedia processing apparatus 11 disables outputting of a display signal, stops all decoding, and does not respond to all buttons of a remote controller except a power button. However, the multimedia processing apparatus 11 is in normal network connection and normally communicates with the multimedia processing server 13.

The network standby mode: The multimedia processing apparatus 11 is powered on. The multimedia processing apparatus 11 is deregistered from the multimedia processing server 13. The multimedia processing apparatus 11 is disconnected from a network, a CPU of the multimedia processing apparatus 11 stops running, and a memory of the multimedia processing apparatus 11 does not perform temporary buffering; and only a receiver of the remote controller, a power button of a front panel, and a network port remain in an operating state, and can receive a power-on command from the remote controller, buttons of the front panel, and the network.

The real standby mode: The multimedia processing apparatus 11 is powered on. The multimedia processing apparatus 11 is deregistered from the multimedia processing server 13. The multimedia processing apparatus 11 is disconnected from a network, a CPU of the multimedia processing apparatus 11 stops running, and a memory of the multimedia processing apparatus 11 does not perform temporary buffering; and only a receiver of the remote controller and a power button of a front panel can receive a power-on command.

It should be noted that, a multimedia processing apparatus 11 in network standby mode differs from a multimedia processing apparatus 11 in real standby mode in that: if supporting a Wake-on-LAN (Wake on LAN, WOL) function, the multimedia processing apparatus 11 in network standby mode can be woken up by a Wake-on-LAN message sent by another apparatus of the multimedia system 1. Specifically, another multimedia processing apparatus may send a Wake-on-LAN message to the multimedia processing apparatus 11. If receiving the Wake-on-LAN message, the multimedia processing apparatus 11 in network standby mode starts a power-on process, and is registered with the multimedia processing server 13.

As shown in FIG. 2, after the multimedia processing apparatus 11 is powered on, the transceiver module 111 of the multimedia processing apparatus 11 sends an authentication request 110 to the multimedia processing server 13. After receiving the authentication request 110, the transceiver module 131 of the multimedia processing server 13 performs authentication processing on the multimedia processing apparatus 11. After the authentication processing is completed, the transceiver module 131 of the multimedia processing server 13 sends an authentication result 130 to the multimedia processing apparatus 11, to notify the multimedia processing apparatus 11 that authentication succeeds. Subsequently, the transceiver module 111 of the multimedia processing apparatus 11 sends a management information request 112 to the multimedia processing server 13, so that the multimedia processing server 13 sends management information 132 to the multimedia processing apparatus 11 according to the management information request 112 of the multimedia processing apparatus 11. The multimedia processing apparatus 11 receives the management information 132 from the multimedia processing server 13, and determines an operating status and management of the multimedia processing apparatus 11 according to the management information 132.

Specifically, to uniformly manage all apparatuses in the multimedia system 1, the multimedia processing server 13 has the management information 132, and after authenticated, all the apparatuses in the multimedia system 1 separately obtain the management information 132 from the multimedia processing server 13, so as to be uniformly managed. The following describes parameters included in the management information 132. It should be noted that, a standby mode mentioned in descriptions of the following parameters includes only a network standby mode or a real standby mode:
a device model of a multimedia processing apparatus;
a maximum inactivity interval: If receiving no instruction (including an instruction triggered by a person or an instruction triggered by a task) within the interval, the multimedia processing apparatus enters a standby mode. For example, if receiving no instruction on a home page of an Electronic Program Guide (Electronic Program Guide, EPG) for two hours, the multimedia processing apparatus enters a standby mode. It should be noted that, if the multimedia processing apparatus has a task (for example, a recording task) that is running, the multimedia processing apparatus does not enter the standby mode.
a prestart interval: A time at which the multimedia processing apparatus is woken up in advance. For example, if the multimedia processing apparatus needs to execute a task at 9 a.m., and the prestart interval is 15 minutes, the multimedia processing apparatus is woken up at 8: 45 a.m.
a maximum standby interval: For example, if the maximum standby interval is set to be five hours, the multimedia processing apparatus is automatically woken up after being in standby mode for five hours. Each time the multimedia processing apparatus is woken up, the multimedia processing apparatus inquires the multimedia processing server about whether there is a new task. If within the prestart interval, there is no task needing to be executed, the multimedia processing apparatus enters a standby mode again.
a maximum wait interval: When a multimedia processing apparatus in standby mode is automatically woken up by a task, the multimedia processing apparatus needs to return to the standby mode after executing the task. In this case, the multimedia processing apparatus waits for the maximum wait interval before entering the standby mode. If there is a task to be executed within the maximum wait interval, the multimedia processing apparatus does not enter the standby mode.

It should be noted that, various parameters of the foregoing management information 132 may be varied according to different management policies. If requesting the management information 132 from the multimedia processing server 13 at different time points, different apparatuses of the multimedia system 1 may determine operating statuses and management of the different apparatuses according to different parameters. Therefore, to obtain latest management information in real time, the multimedia processing apparatus 11 may regularly request management information from the multimedia processing server 13.

After obtaining the management information 132, the multimedia processing apparatus 11 may perform self-management according to a parameter included in the management information 132. The processing module 113 of the multimedia processing apparatus 11 may determine, according to the management information 132, which state needs to be entered at a time point. If the processing module 113 of the multimedia processing apparatus 11 determines that the multimedia processing apparatus 11 is to disconnect from the multimedia processing server 13 after a particular time, the transceiver module 111 sends a task list request 114 to the multimedia processing server 13. The multimedia processing server 13 sends a remote task list 134 to the multimedia processing apparatus 11 based on the task list request 114. After the transceiver module 111 of the multimedia processing apparatus 11 receives the remote task list 134, the processing module 113 can calculate a wake time 116 of the multimedia processing apparatus 11 according to the management information 132 and the remote task list 134.

Specifically, if another apparatus in the multimedia system 1 desires the multimedia processing apparatus 11 to execute a task (for example, recording a video or program provided by the multimedia processing server 13), the another apparatus may create the task in the multimedia processing server 13, to form the remote task list 134. After obtaining the remote task list 134 from the multimedia processing server 13, the multimedia processing apparatus 11 may learn which tasks need to be executed at particular time points. Therefore, the processing module 113 of the multimedia processing apparatus 11 may request the multimedia processing server 13 to transfer a latest remote task list (that is, the remote task list 134) when determining to disconnect from the multimedia processing server 13. The processing module 113 can calculate the wake time 116 of the multimedia processing apparatus 11 according to the remote task list 134 and the management information 132.

For example, if a current time is 4 p.m., the processing module 113 determines to disconnect from the multimedia processing server 13 after 20 minutes (that is, 4:20 p.m.), so that the transceiver module 111 sends the task list request 114 to the multimedia processing server 13, to obtain the remote task list 134. There are two recording tasks in the remote task list 134 that need to be respectively executed at 4:30 p.m. and 7 p.m., and it takes 30 minutes to execute each of the two tasks; and a prestart interval of the management information 132 is 15 minutes. Therefore, the multimedia processing apparatus 11 needs to be woken up at 4:15, which is earlier than 4:20 p.m., so that the multimedia processing apparatus 11 will not disconnect from the multimedia processing server 13 at 4:20 p.m. After a task is executed at 5 p.m., the processing module 113 of the multimedia processing apparatus 11 obtains through calculation that the wake time 116 of the multimedia processing apparatus 11 is 6:45 p.m. still according to the remote task list 134 and the management information 132.

It should be noted that, because the multimedia processing apparatus 11 may also store a local task list, to execute a task of the multimedia processing apparatus 11, the processing module 113 may also calculate the wake time 116 of the multimedia processing apparatus 11 according to the management information 132, the remote task list 134, and the local task list; or the processing module 113 may also calculate the wake time 116 of the multimedia processing apparatus 11 according to the management information 132 and the local task list.

For example, if a current time is 4 p.m., the processing module 113 determines to disconnect from the multimedia processing server 13 after 20 minutes (that is, 4:20 p.m.), so that the transceiver module 111 sends the task list request 114 to the multimedia processing server 13, to obtain the remote task list 134. There is a recording task in the remote task list 134 that needs to be executed at 4:30 p.m., and there is a recording task in the local task list that needs to be executed at 7 p.m. In addition, it takes 30 minutes to execute each of the two tasks, and a prestart interval of the management information 132 is 15 minutes. Therefore, the multimedia processing apparatus 11 needs to be woken up at 4:15, which is earlier than 4:20 p.m., so that the multimedia processing apparatus 11 will not disconnect from the multimedia processing server 13 at 4:20 p.m. After the task in the remote task list 134 is executed at 5 p.m., the processing module 113 of the multimedia processing apparatus 11 obtains through calculation that the wake time 116 of the multimedia processing apparatus 11 is 6:45 p.m. still according to the remote task list 134, the local task list, and the management information 132, to execute the recording task in the local task list.

After the wake time 116 is calculated, because the multimedia processing server 13 of the multimedia system 1 needs to master a status of an apparatus served by the multimedia processing server 13, the transceiver module 111 of the multimedia processing apparatus 11 sends the wake time 116 to the multimedia processing server 13, and after the transceiver module 131 of the multimedia processing server 13 receives the wake time 116, in addition to recording the wake time 116, the processing module 133 of the multimedia processing server 13 may further determine, according to a load status of the multimedia processing server 13, whether to adjust the wake time 116. If the multimedia processing server 13 is not overloaded at the wake time 116, the processing module 133 does not adjust the wake time 116. If the multimedia processing server 13 is overloaded at the wake time 116, the processing module 133 adjusts the wake time 116, to generate and record an adjusted wake time 136.

Specifically, there is an upper limit on the load of the multimedia processing server 13 at a same time point. To prevent the multimedia processing server 13 from being overloaded and to enable the multimedia system 1 to have preferred efficiency, the processing module 133 of the multimedia processing server 13 determines, according to a time slot (Time Slot) set included in the management information 132, whether load of a time slot in which the wake time 116 is located exceeds the load of the multimedia processing server 13.

Specifically, the time slot set includes multiple time slots. There is a chronological relationship between time slots. The processing module 133 of the multimedia processing server 13 may determine how many apparatuses wake up within each time slot. If a time slot within which the wake time 116 falls is after a time at which the multimedia processing apparatus 11 wakes up and connects to the multimedia processing server 13, and a quantity of multimedia processing apparatuses that are connecting to the multimedia processing server 13 is less than or equal to an upper-limit quantity, the processing module 133 does not adjust the wake time 116. If a time slot within which the wake time 116 falls is after a time at which the multimedia processing apparatus 11 wakes up and connects to the multimedia processing server 13, and a quantity of multimedia processing apparatuses that are connecting to the multimedia processing server 13 is greater than an upper-limit quantity, the processing module 133 adjusts the wake time 116, that is, moves the wake time 116 of the multimedia processing apparatus 11 forwards or backwards by one time slot, to prevent the multimedia processing server 13 from being overloaded.

For example, assuming that an upper-limit quantity of woken apparatuses within each time slot is 900, a length of each time slot is five minutes, a quantity of woken apparatuses within a first time slot from 20140918184300 (figures from left to right respectively represent: common era: year: four figures, month: two figures, date: two figures, hour: two figures, minute: two figures, and second: two figures) to 20140918184800 in the management information 132 is 899, and the wake time 116 is 18:45, September 18, 2014, the processing module 133 determines that the multimedia processing apparatus 11 can be woken up within the first time slot. In addition, after the multimedia processing apparatus 11 is woken up, 1 is added to a quantity of apparatuses, and the quantity of apparatuses becomes 900, which is not greater than the upper-limit quantity 900 of apparatuses. Therefore, the processing module 133 does not adjust the wake time 116.

In another example, assuming that an upper-limit quantity of woken apparatuses within each time slot is 900, a length of each time slot is five minutes, a quantity of woken apparatuses within a first time slot from 20140918184301 to 20140918184800 in the management information 132 is 900, and the wake time 116 is 18:45, September 18, 2014, the processing module 133 determines that the multimedia processing apparatus 11 cannot be woken up within the first time slot. Because 1 is added to a quantity of apparatuses after the multimedia processing apparatus 11 is woken up, and the quantity of apparatuses becomes 901, which is already greater than the upper-limit quantity 900 of apparatuses, the processing module 133 moves the wake time 116 of the multimedia processing apparatus 11 backwards to a second time slot from 20140918184801 to 20140918185300, and adjusts the wake time 116 to 18:49, September 18, 2014, to generate the adjusted wake time 136.

It should be noted that, the processing module 133 may move the wake time 116 of the multimedia processing apparatus 11 forwards to another time slot from 20140918183801 to 20140918184300, and correspondingly adjust the wake time 116, to generate the adjusted wake time 136. Alternatively, the processing module 133 may move the wake time 116 of the multimedia processing apparatus 11 forwards or backwards to another time slot in an inconsecutive manner, for example, from 20140918182801 to 20140918183300 or from 20140918185801 to 20140918186300. In addition, if a time slot proper to the multimedia processing apparatus 11 cannot be found among all time slots, the processing module 133 can use only the wake time 116 and configure the wake time 116 in the first time slot to which the wake time 116 belongs.

After the adjusted wake time 136 is generated, the transceiver module 131 of the multimedia processing server 13 sends the adjusted wake time 136 to the multimedia processing apparatus 11. After the transceiver module 111 of the multimedia processing apparatus 11 receives the adjusted wake time 136, the processing module 113 replaces the wake time with the adjusted wake time, so that the multimedia processing apparatus 11 can wake up at the adjusted wake time 136. Because a next wake time of the multimedia processing apparatus 11 is already determined, to save a resource of the multimedia system 1, the processing module 113 sends a deregistration request 118 to the multimedia processing server 13 by using the transceiver module 111, to execute a deregistration program. The multimedia processing server 13 may further record a status of the multimedia processing apparatus 11 as deregistered. After deregistration is completed, the multimedia processing apparatus 11 may enter a standby mode.

It should be noted that, as described above, the standby mode includes three modes: a fake standby mode, a network standby mode, and a real standby mode. After deregistration is completed, which standby mode the multimedia processing apparatus 11 enters may be set by a user. If the user does not perform the setting, the multimedia processing apparatus 11 may automatically enter the network standby mode, or the multimedia processing apparatus 11 may automatically enter another standby mode, which is not limited.

When the adjusted wake time 136 arrives, the multimedia processing apparatus 11 wakes up due to needing to execute a task B. Because the multimedia processing apparatus 11 is already deregistered from the multimedia processing server 13 previously, the multimedia processing apparatus 11 executes a registration program A at the multimedia processing server 13 by using the transceiver module 111. After registration is completed, the transceiver module 111 sends a second management information request 11a to the multimedia processing server 13, so that the multimedia processing server 13 sends latest management information 138. The transceiver module 111 of the multimedia processing apparatus 11 receives the management information 138 and stores the management information 138 in the multimedia processing apparatus 11. Then, the processing module 113 of the multimedia processing apparatus 11 executes the task B by using the transceiver module 111.

It should be noted that, the multimedia processing apparatus 11 may first execute a task B after registration is completed. After the task B is executed, the transceiver module 111 sends a request 11a to the multimedia processing server 13, so that the multimedia processing server 13 sends latest management information 138. The transceiver module 111 of the multimedia processing apparatus 11 receives the management information 138 and stores the management information 138 in the multimedia processing apparatus 11. Alternatively, the multimedia processing apparatus 11 may separately execute a task B and request latest management information 138 from the multimedia processing server 13 in a parallel processing manner after registration is completed.

In conclusion, all apparatuses served by the multimedia processing server 13 in the implementation can manage statuses of all the apparatuses based on management information. In addition, if the multimedia processing apparatus 11 needs to execute a task (for example, recording a video or program provided by the multimedia processing server 13), another apparatus in the multimedia system 1 may create the task in the multimedia processing server 13, to form a remote task list. The multimedia processing apparatus 11 may acquire the remote task list from the multimedia processing server 13, and wake up according to a running time of each task, to execute the task. More specifically, by means of the multimedia system 1 in this embodiment, even if the multimedia processing apparatus 11 enters a standby mode, the multimedia processing apparatus can still normally execute a created or a to-be-created remote task, so that an entire operation of the multimedia system 1 is more efficient.

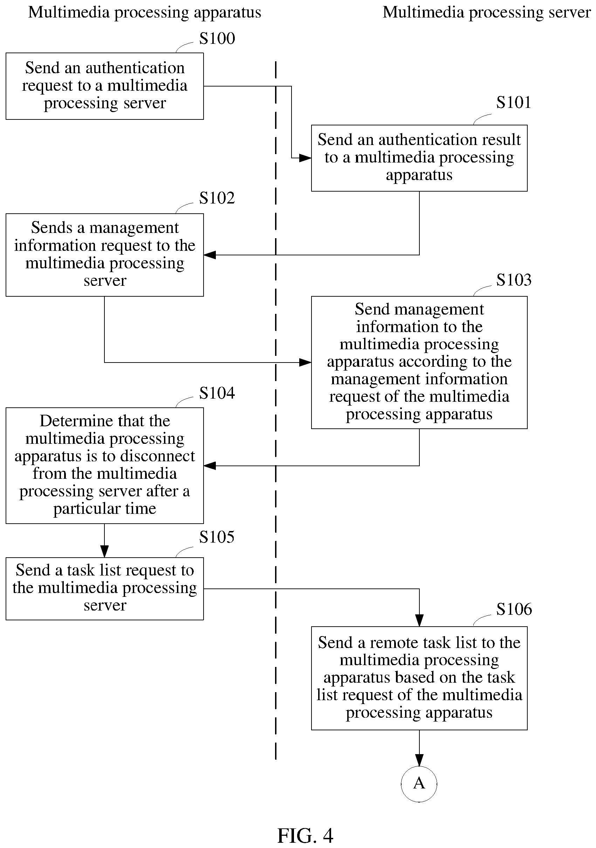

Refer to FIG. 4 to FIG. 8, which show a flowchart of a multimedia processing method according to a second embodiment. The multimedia processing method may be applied to the multimedia system 1 described in the first embodiment. To understand this embodiment, refer to the first embodiment, but the first embodiment is not intended to limit the implementation scope of this embodiment. First referring to FIG. 4, in step S 100, a multimedia processing apparatus sends an authentication request to a multimedia processing server, to be registered with the multimedia processing server. After the multimedia processing server performs authentication processing, in step S101, the multimedia processing server sends an authentication result to the multimedia processing apparatus. In step S102, the multimedia processing apparatus sends a management information request to the multimedia processing server, to request management information. In step S103, management information is sent to the multimedia processing apparatus according to the management information request of the multimedia processing apparatus. For detailed descriptions of the management information, refer to the first embodiment, and details are not described herein again.

In step S104, it is determined that the multimedia processing apparatus is to disconnect from the multimedia processing server after a particular time. In step S 105, a task list request is sent to the multimedia processing server, to obtain a remote task list. In step S106, the multimedia processing server sends the remote task list based on the task list request of the multimedia processing apparatus, so that the multimedia processing apparatus may learn a current latest task and a running time of the current latest task by means of the remote task list.

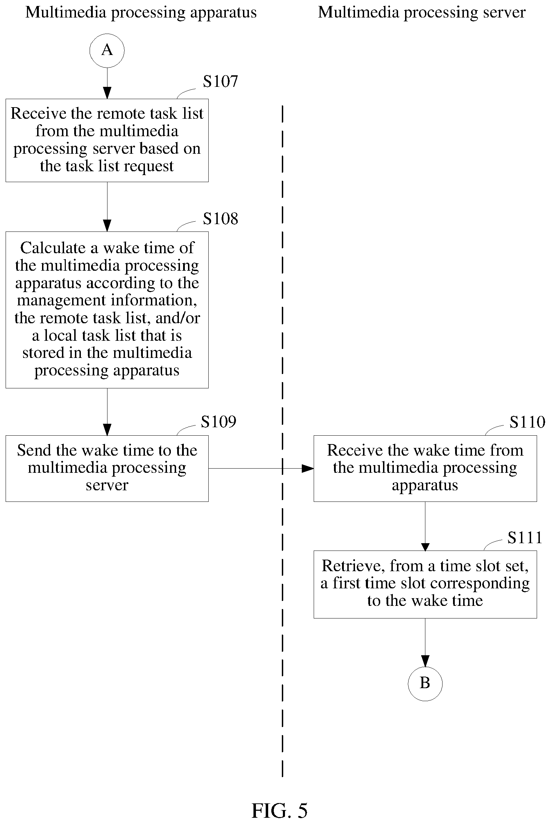

Referring to FIG. 5, in step S 107, the multimedia processing apparatus receives the remote task list from the multimedia processing server based on the task list request. In step S108, a wake time of the multimedia processing apparatus is calculated according to the management information, the remote task list, and/or a local task list that is stored on the multimedia processing apparatus. Specifically, if the multimedia processing apparatus needs to execute a task (for example, recording a video or program) for another apparatus, the another apparatus may create the task in the multimedia processing server, to form a remote task list. After obtaining the remote task list from the multimedia processing server, the multimedia processing apparatus may learn which tasks in the remote task list need to be executed at particular time points. If the multimedia processing apparatus also stores a local task list, the multimedia processing apparatus may also learn which tasks in the local task list need to be executed at particular time points. Therefore, after determining that the multimedia processing apparatus will disconnect from the multimedia processing server, the multimedia processing apparatus requests the multimedia processing server to transfer a latest remote task list. The multimedia processing apparatus may calculate a wake time of the multimedia processing apparatus according to the remote task list, the management information 132, and/or the local task list.

In step S 109, the multimedia processing apparatus sends the wake time to the multimedia processing server, so that the multimedia processing server records the wake time of the multimedia processing apparatus. In step S 110, the multimedia processing server receives the wake time from the multimedia processing apparatus. In addition, there is an upper limit on load of the multimedia processing server at a same time point. To prevent excessive apparatuses from waking up at a same time point and to prevent the multimedia processing server from being overloaded, the management information includes a time slot (Time Slot) set, the time slot set includes multiple time slots, and there is a chronological relationship between time slots.

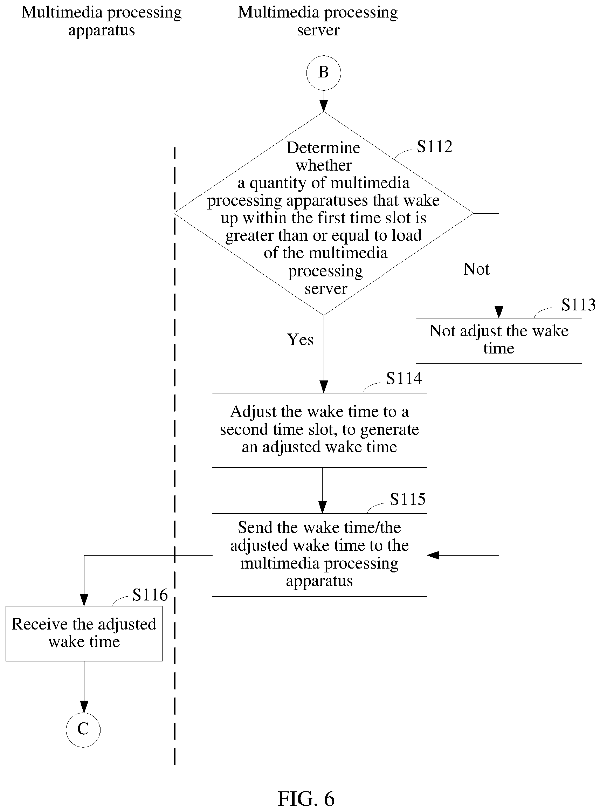

Subsequently, in step S111, the multimedia processing server acquires, from a time slot set, a first time slot corresponding to the wake time. Further referring to FIG. 6, in step S 112, whether a quantity of multimedia processing apparatuses that wake up within the first time slot is greater than or equal to load of the multimedia processing server is determined. If not, step S113 is performed: the wake time is not adjusted. If yes, step S114 is performed: the wake time is adjusted to a second time slot, to generate an adjusted wake time.

Specifically, the time slot set includes multiple time slots, and there is a chronological relationship between time slots. After a quantity of apparatuses that are currently connecting to the multimedia processing server 13 within each time slot is determined, if a time slot within which that the wake time falls is after a time at which the multimedia processing apparatus 11 wakes up and connects to the multimedia processing server 13, a quantity of apparatuses that are connecting to the multimedia processing server 13 is less than or equal to an upper-limit quantity, the multimedia processing server does not adjust the wake time; or if a time slot within which the wake time falls is after a time at which the multimedia processing apparatus wakes up and connects to the multimedia processing server 13, and a quantity of apparatuses that are being connected to the multimedia processing server 13 is greater than an upper-limit quantity, the multimedia processing server adjusts the wake time, that is, moves the wake time of the multimedia processing apparatus 11 forwards or backwards by one time slot. In addition, the multimedia processing server may move the wake time forwards or backwards to another time slot in an inconsecutive manner, and this is not limited to moving the wake time by only one time slot.

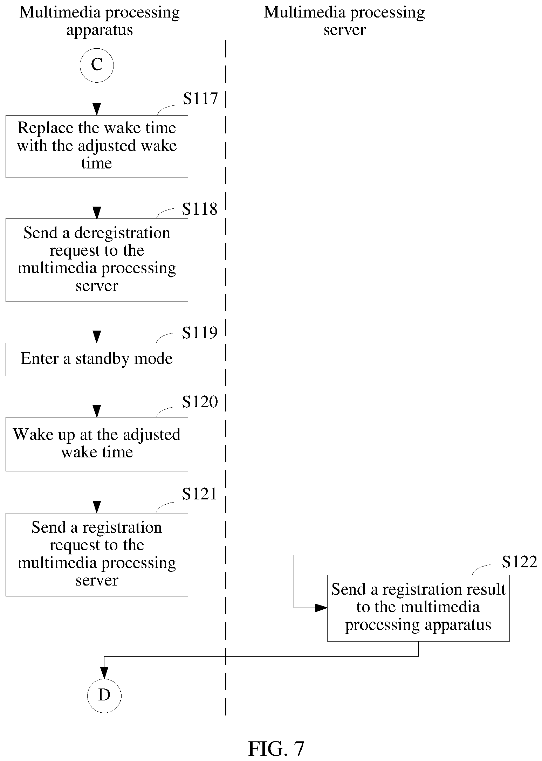

Subsequently, in step S115, the multimedia processing server sends the adjusted wake time to the multimedia processing apparatus, so that the multimedia processing apparatus wakes up at the adjusted wake time. In step S116, the multimedia processing apparatus receives the adjusted wake time. Referring to FIG. 7, in step S117, the multimedia processing apparatus replaces the wake time with the adjusted wake time. Because a next wake time of the multimedia processing apparatus is already determined, to save a resource of a multimedia system, in step S118, the multimedia processing apparatus sends a deregistration request to the multimedia processing server, to execute a deregistration program. The multimedia processing server may further record a status of the multimedia processing apparatus as deregistered. After deregistration is completed, in step S119, the multimedia processing apparatus 11 may enter a standby mode.

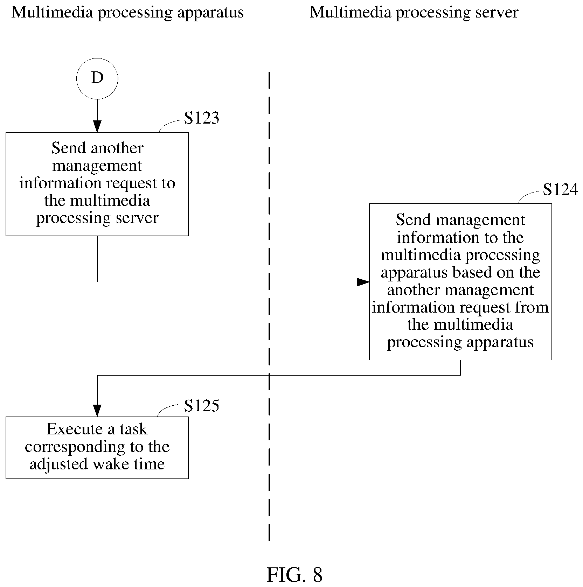

Then, in step S120, the multimedia processing apparatus wakes up at the adjusted wake time. Because the multimedia processing apparatus is already deregistered from the multimedia processing server previously, in step S121, the multimedia processing apparatus sends a registration request to the multimedia processing server, so as to be registered with the multimedia processing server. In step S122, the multimedia processing server sends a registration result to the multimedia processing apparatus. Referring to FIG. 8, after registration is completed, in step S 123, the multimedia processing apparatus sends another management information request to the multimedia processing server, to request latest management information. In step S124, the multimedia processing server sends management information to the multimedia processing apparatus based on the another management information request. Subsequently, in step S125, the multimedia processing apparatus executes a task corresponding to the adjusted wake time.

It should be noted that, step S125 may be performed before step S123. That is, a task is first performed, and after the task is completed, a third request is then sent to the multimedia processing server 13, so that the multimedia processing server sends latest management information. Alternatively, after registration is completed, step S123 and step S125 are separately performed in a parallel processing manner.

In conclusion, by means of the multimedia processing method in the implementation, an apparatus in a multimedia system is enabled to manage a status of the apparatus based on management information. In addition, if a multimedia processing apparatus needs to execute a task (for example, recording a video or program provided by a multimedia processing server), another apparatus in the multimedia system may create the task in the multimedia processing server, to form a remote task list. The multimedia processing apparatus may acquire the remote task list from the multimedia processing server, and wake up according to a running time of each task, to execute the task. More specifically, by means of the multimedia processing method in this embodiment, even if the multimedia processing apparatus enters a standby mode, the multimedia processing apparatus can still normally execute a created or a to-be-created remote task, so that an entire operation of the multimedia system is more efficient.

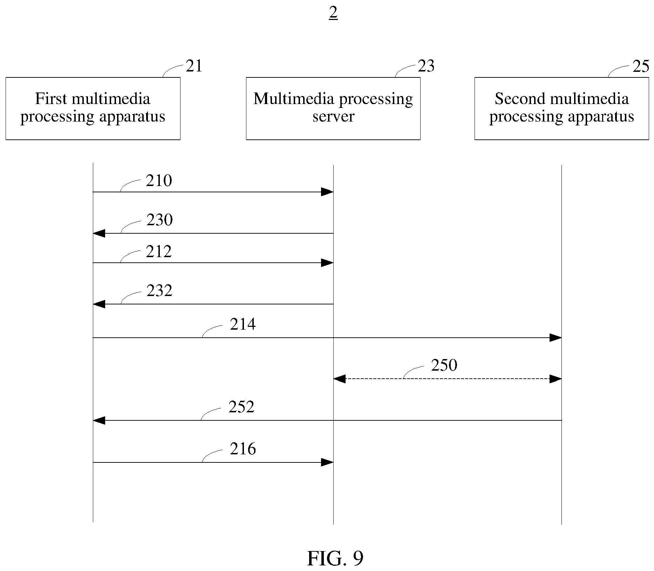

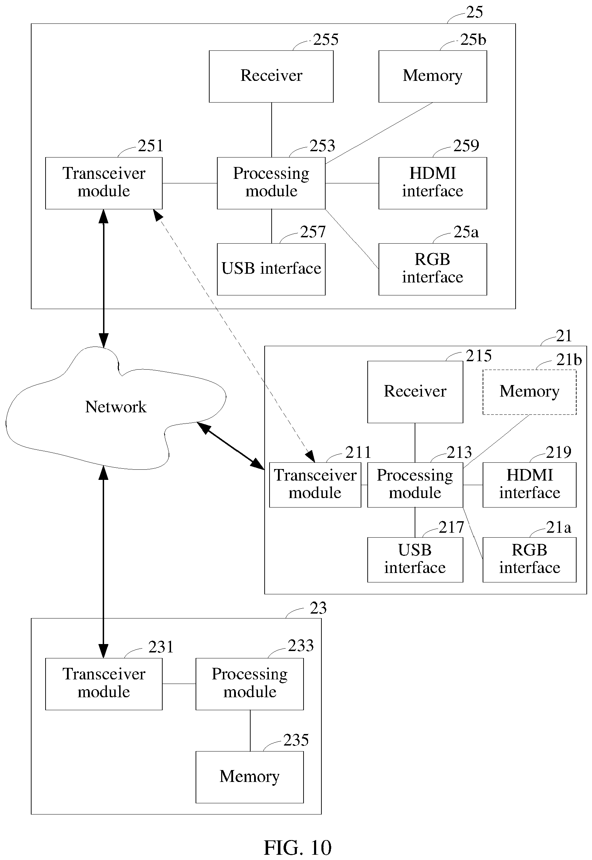

Refer to FIG. 9, which shows a flowchart of signaling of a multimedia system 2 according to a third embodiment. The multimedia system 2 includes a first multimedia processing apparatus 21, a multimedia processing server 23, and a second multimedia processing apparatus 25. The first multimedia processing apparatus 21, the multimedia processing server 23, and the second multimedia processing apparatus 25 may be connected to each other by means of the Internet, to receive data from each other or send data to each other. Further referring to FIG. 10, FIG. 10 shows a schematic structural diagram of the multimedia system 2. Structures of the second multimedia processing apparatus 25 and the multimedia processing server 23 are similar to those of the multimedia processing apparatus 11 and the multimedia processing server 13 mentioned in the first embodiment, and details are not described herein again. A structure of the first multimedia processing apparatus 21 is also similar to that of the multimedia processing apparatus 11 mentioned in the first embodiment to great extent. A same part is not described herein again. The structure of the first multimedia processing apparatus 21 differs from that of the multimedia processing apparatus 11 in that, the first multimedia processing apparatus 21 may have no memory 21b. If the first multimedia processing apparatus 21 has the memory 21b, the memory 21b is not enabled.

The following continues to describe functions of the first multimedia processing apparatus 21, the multimedia processing server 23, the second multimedia processing apparatus 25 and modules thereof in the multimedia system 2. To make this embodiment more easily comprehensible, the following provides a description by using a hybrid video system as an example. That is, the hybrid video system may be considered as the multimedia system 2, the first multimedia processing apparatus 21 may be considered as a non-PVR STB or an OTT client in the hybrid video system, the multimedia processing server 23 may be considered as a server in the hybrid video system, and stores at least video content or a program, and the second multimedia processing apparatus 25 may be considered as a PVR STB in the hybrid video system. It should be noted that, the second multimedia processing apparatus 25 supports a Wake-on-LAN (Wake on LAN, WOL) function, and various standby modes of the second multimedia processing apparatus 25 are basically the same as those of the multimedia processing apparatus 11 in the first embodiment, and details are not described herein again.

As shown in FIG. 9, if desiring the second multimedia processing apparatus 25 to execute a task (for example, recording a video or program provided by the multimedia processing server 13), the first multimedia processing apparatus 21 needs to first learn a current status of the second multimedia processing apparatus 25. Because the multimedia processing server 23 stores statuses of all apparatuses connecting to the multimedia processing server 23, a transceiver module 211 of the first multimedia processing apparatus 21 sends a status acquiring request 210 to the multimedia processing server 23, to request a current status of the second multimedia processing apparatus 25 from the multimedia processing server 23. After a transceiver module 231 of the multimedia processing server 23 receives the status acquiring request 210, a processing module 233 of the multimedia processing server 23 sends a current status 230 of the second multimedia processing apparatus 25 to the first multimedia processing apparatus 21 by using the transceiver module 231.

After the transceiver module 211 of the first multimedia processing apparatus 21 receives the current status 230, if the current status is that the second multimedia processing apparatus 25 and the multimedia processing server 23 are in a network disconnection state, the transceiver module 211 of the first multimedia processing apparatus 21 sends another request 212 to the multimedia processing server 23, to obtain a wake time of the second multimedia processing apparatus 25, and the processing module 233 of the multimedia processing server 23 sends the wake time 232 of the second multimedia processing apparatus 25 to the first multimedia processing apparatus 21 by using the transceiver module 231.

A processing module 213 of the first multimedia processing apparatus 21 further determines a relative relationship between an execution time of the task that the first multimedia processing apparatus 21 desires the second multimedia processing apparatus 25 to execute and the wake time. If the relative relationship is that the execution time is later than the wake time of the second multimedia processing apparatus 25, the transceiver module 211 of the first multimedia processing apparatus 21 sends a task creation message to the multimedia processing server 23, so that the multimedia processing server 23 creates a task in a remote task list according to the task creation message. After acquiring the remote task list from the multimedia processing server 23, the second multimedia processing apparatus 25 may wake up and then execute the task. It should be noted that, the current status and the wake time of the second multimedia processing apparatus 25 may be further separately sent by the multimedia processing server 23 to the first multimedia processing apparatus 21. That the status information 230 includes the current status and the wake time of the second multimedia processing apparatus 25 is not used as a limitation on this embodiment.

If the relative relationship is that the execution time is earlier than or equal to the wake time, the transceiver module 211 of the first multimedia processing apparatus 21 sends a Wake-on-LAN message 214 to the second multimedia processing apparatus 25, to wake up the second multimedia processing apparatus 25 by means of a Wake-on-LAN function. Specifically, the second multimedia processing apparatus 25 may connect to the multimedia processing server 23 by means of an IP network. That the second multimedia processing apparatus 25 and the multimedia processing server 23 are in a network disconnection state refers to that the IP network is out of service, but the second multimedia processing apparatus 25 still keeps connecting to a local area network (LAN, Local Area Network). Therefore, the transceiver module 211 of the first multimedia processing apparatus 21 may send a Wake-on-LAN message 214 to the second multimedia processing apparatus 25 by means of the local area network, to wake up the second multimedia processing apparatus 25 by using a Wake-on-LAN function.

After a transceiver module 251 of the second multimedia processing apparatus 25 receives the Wake-on-LAN message 214, a processing module 253 connects to the multimedia processing server 23 based on the Wake-on-LAN message 214 and by using the transceiver module 251, and executes an authentication program 250 to the multimedia processing server 23. After the authentication program 250 is executed, the transceiver module 251 of the second multimedia processing apparatus 25 sends a woken message 252 to the first multimedia processing apparatus 21. After the woken message 252 is received, the transceiver module 211 of the first multimedia processing apparatus 21 sends a task creation message 216 to the multimedia processing server 23 based on the woken message 252. After the transceiver module 231 of the multimedia processing server 23 receives the task creation message 216, the processing module 233 creates a task in a remote task list according to the task creation message 216. After acquiring the remote task list from the multimedia processing server 23, the second multimedia processing apparatus 25 may wake up and then execute the task.

It should be noted that, in this embodiment, the second multimedia processing apparatus 25 may send the woken message 252 by using a standard of Digital Living Network Alliance (DLNA, Digital Living Network Alliance). In another embodiment, the second multimedia processing apparatus 25 may send the woken message 252 according to another communications standard.

For example, if desiring the second multimedia processing apparatus 25 to execute a recording task at 4 p.m., the first multimedia processing apparatus 21 needs to first learn whether the second multimedia processing apparatus 25 is currently in a normal mode, a fake standby mode, a network standby mode, or a real standby mode. After obtaining status information from the multimedia processing server 23, the first multimedia processing apparatus 21 may learn which status the second multimedia processing apparatus 25 is in. After the first multimedia processing apparatus 21 learns that the second multimedia processing apparatus 25 is in a normal mode or a fake standby mode, because the second multimedia processing apparatus 25 is in normal network connection, the second multimedia processing apparatus 25 may normally communicate with the multimedia processing server 13. The transceiver module 211 may send a task creation message 216 to the multimedia processing server 23, so that the second multimedia processing apparatus 25 acquires a remote task list from the multimedia processing server 23 and executes the task at 4 p.m.

In addition, after the first multimedia processing apparatus 21 learns that the second multimedia processing apparatus 25 is in real standby mode, because the second multimedia processing apparatus 25 is disconnected from a network and cannot normally communicate with the multimedia processing server 13, the first multimedia processing apparatus 21 further determines when the second multimedia processing apparatus 25 wakes up. If the second multimedia processing apparatus 25 wakes up at 3:30 p.m., which is earlier than a running time 4 p.m. of the task, the transceiver module 211 may send a task creation message 216 to the multimedia processing server 23, so that the second multimedia processing apparatus 25 acquires a remote task list from the multimedia processing server 23 and executes the task at 4 p.m. If the second multimedia processing apparatus 25 wakes up at 4:30 p.m., which is later than a running time 4 p.m. of the task, and the second multimedia processing apparatus 25 in real standby mode does not support a Wake-on-LAN function, the first multimedia processing apparatus 21 cannot wake up the second multimedia processing apparatus 25 by means of a network, a task cannot be created either, and the second multimedia processing apparatus 25 cannot learn that the task needs to be executed at 4 p.m. either.

In addition, after the first multimedia processing apparatus 21 learns that the second multimedia processing apparatus 25 is in network standby mode, because the second multimedia processing apparatus 25 is disconnected from a network and cannot normally communicate with the multimedia processing server 13, the first multimedia processing apparatus 21 further determines when the second multimedia processing apparatus 25 wakes up. If the second multimedia processing apparatus 25 wakes up at 3:30 p.m., which is earlier than a running time 4 p.m. of the task, the transceiver module 211 may send a task creation message 216 to the multimedia processing server 23, so that the second multimedia processing apparatus 25 acquires a remote task list from the multimedia processing server 23 and executes the task at 4 p.m. If the second multimedia processing apparatus 25 wakes up at 4:30 p.m., which is later than a running time 4 p.m. of the task, but because the second multimedia processing apparatus 25 in network standby mode supports a Wake-on-LAN function, the first multimedia processing apparatus 21 can wake up the second multimedia processing apparatus 25 by means of a network, a task can be created, and the second multimedia processing apparatus 25 can learn that the task needs to be executed at 4 p.m.

In conclusion, the first multimedia processing apparatus 21 in the implementation may manage a status of the first multimedia processing apparatus 21 based on management information. In addition, if the second multimedia processing apparatus 25 needs to execute a task (for example, recording a video or program provided by the multimedia processing server 23), when the second multimedia processing apparatus 25 is in a normal mode or a fake standby mode, the first multimedia processing apparatus 21 may create a task in the multimedia processing server 23, to form a remote task list; or when the second multimedia processing apparatus 25 is in a network standby mode, after waking up the second multimedia processing apparatus 25 by means of a network, the first multimedia processing apparatus 21 may create a task in the multimedia processing server 23, to form a remote task list. The second multimedia processing apparatus 25 may acquire the remote task list from the multimedia processing server 23, and wakes up according to an execution time of each task, to execute the task. More specifically, by means of the multimedia system 2 in this embodiment, even if the second multimedia processing apparatus 25 enters a standby mode, the second multimedia processing apparatus 25 can still normally execute a created or a to-be-created remote task, so that an entire operation of the multimedia system 2 is more efficient.

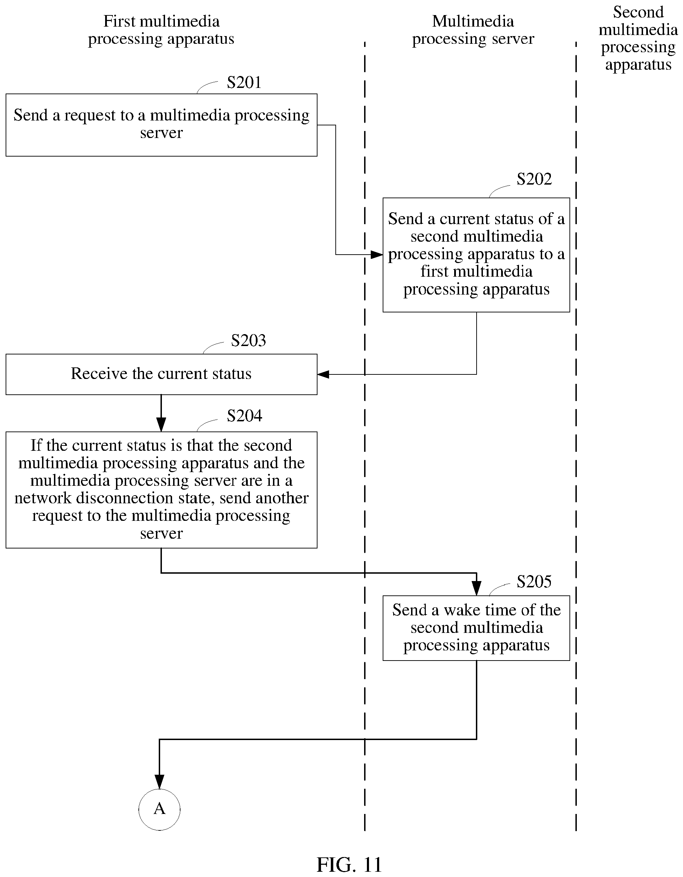

Refer to FIG. 11 to FIG. 14, which show a flowchart of a multimedia processing method according to a fourth embodiment. The multimedia processing method may be applied to the multimedia system 2 (that is, a first multimedia processing apparatus is the first multimedia processing apparatus 21, a multimedia processing server is the multimedia processing server 23, and a second multimedia processing apparatus is the second multimedia processing apparatus 25) described in the third embodiment. To understand this embodiment, refer to the third embodiment, but the third embodiment is not intended to limit the implementation scope of this embodiment.

First referring to FIG. 11, if desiring the second multimedia processing apparatus to execute a task (for example, recording a video or program provided by the multimedia processing server), the first multimedia processing apparatus needs to first learn a current status of the second multimedia processing apparatus. Because the multimedia processing server stores statuses of all apparatuses connecting to the multimedia processing server, in step S201, the first multimedia processing apparatus sends a request to the multimedia processing server, to request a current status of the second multimedia processing apparatus.

In step S202, the multimedia processing server sends status information of the second multimedia processing apparatus to the first multimedia processing apparatus. In step S203, the first multimedia processing apparatus receives the current status. In step S204, if the current status is that the second multimedia processing apparatus and the multimedia processing server are in a network disconnection state, another request is sent to the multimedia processing server, to obtain a wake time of the second multimedia processing apparatus. In step S205, the multimedia processing server sends the wake time of the second multimedia processing apparatus.

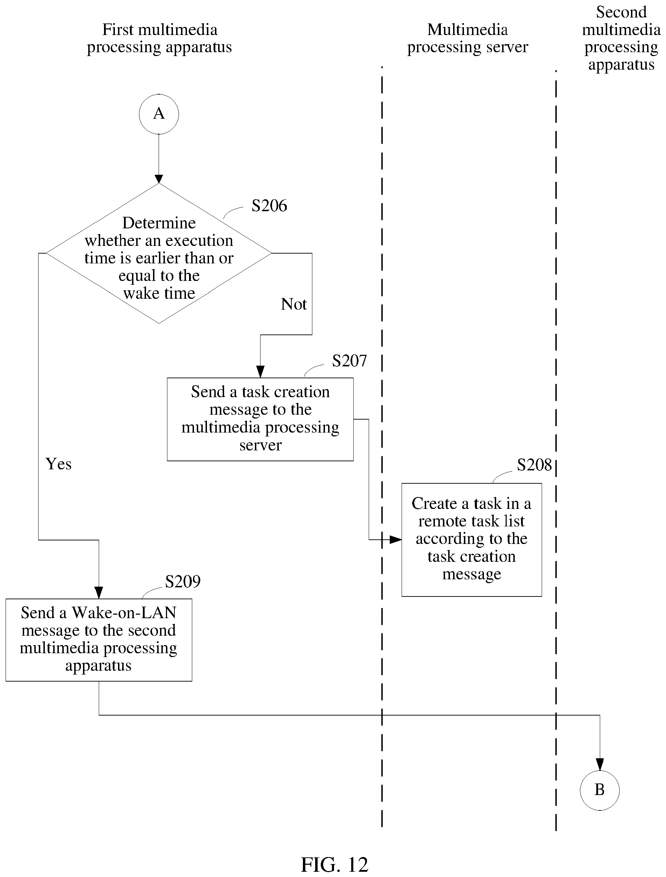

Referring to FIG. 12, in step S206, the first multimedia processing apparatus determines a relative relationship between an execution time of the task and the wake time (that is, determines whether a running time of the task is earlier than or equal to the wake time). If not, step S207 is performed: the first multimedia processing apparatus sends a task creation message to the multimedia processing server. In step S208, the multimedia processing server creates a task in a remote task list according to the task creation message.

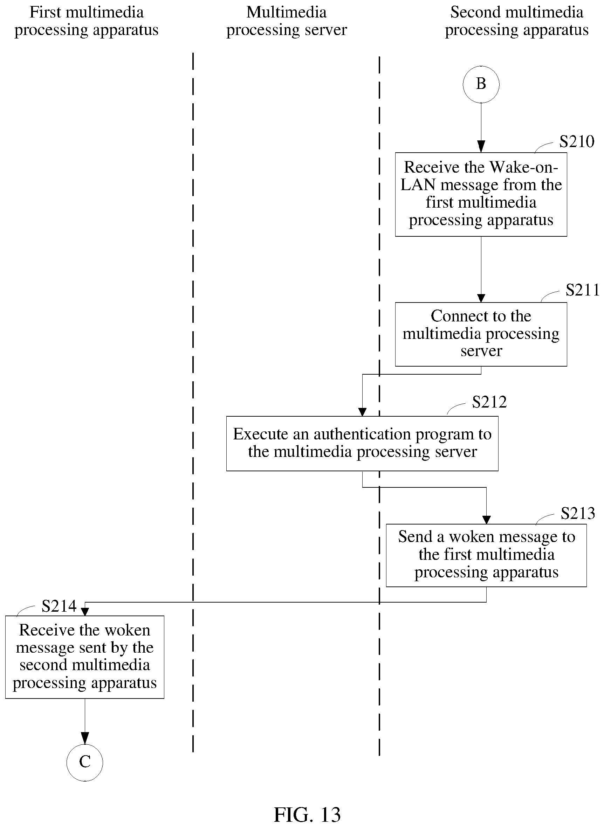

If a running time of the task is earlier than or equal to the wake time, step S209 is performed: the first multimedia processing apparatus sends a Wake-on-LAN message to the second multimedia processing apparatus. Referring to FIG. 13, in step S210, the second multimedia processing apparatus receives the Wake-on-LAN message. In step S211, the second multimedia processing apparatus connects to the multimedia processing server. In step S212, the second multimedia processing apparatus executes an authentication program to the multimedia processing server. After the authentication program is executed, in step S213, the second multimedia processing apparatus sends a woken message to the first multimedia processing apparatus. In step S214, the first multimedia processing apparatus receives the woken message sent by the second multimedia processing apparatus.

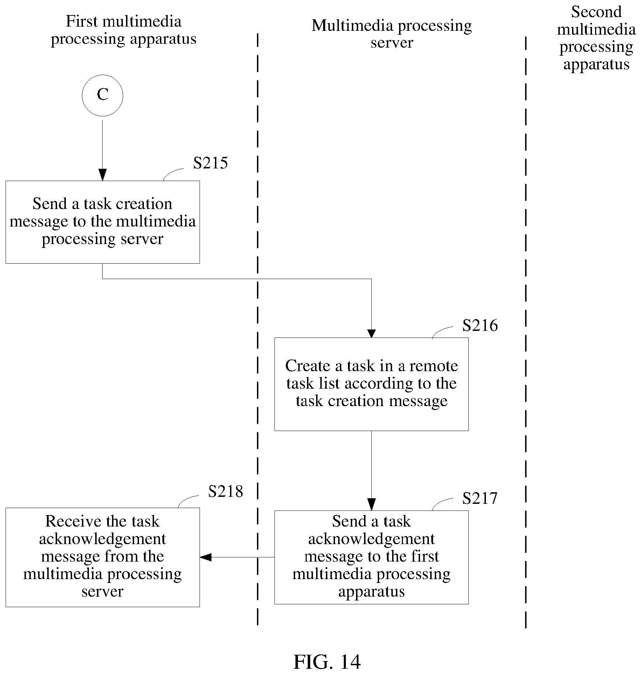

Referring to FIG. 14, in step S215, the first multimedia processing apparatus sends a task creation message to the multimedia processing server based on the woken message. In step S216, the multimedia processing server creates the task in the remote task list according to the task creation message. In step S217, the multimedia processing server sends a task acknowledgement message to the first multimedia processing apparatus. In step S218, the first multimedia processing apparatus receives the task acknowledgement message, to determine that the task is already created in the multimedia processing server.

In conclusion, by means of the multimedia processing method in the implementation, if the second multimedia processing apparatus needs to execute a task (for example, recording a video or program provided by the multimedia processing server), when the second multimedia processing apparatus is in a normal mode or a fake standby mode, the first multimedia processing apparatus may create the task in the multimedia processing server, to form a remote task list; or when the second multimedia processing apparatus is in a network standby mode, after waking up the second multimedia processing apparatus by means of a network, the first multimedia processing apparatus may create the task in the multimedia processing server, to form a remote task list. The second multimedia processing apparatus may acquire the remote task list from the multimedia processing server, and wakes up according to an execution time of each task, to execute the task. More specifically, by means of the multimedia processing method in this embodiment, even if the second multimedia processing apparatus enters a standby mode, the second multimedia processing apparatus can still normally execute a created or a to-be-created remote task.

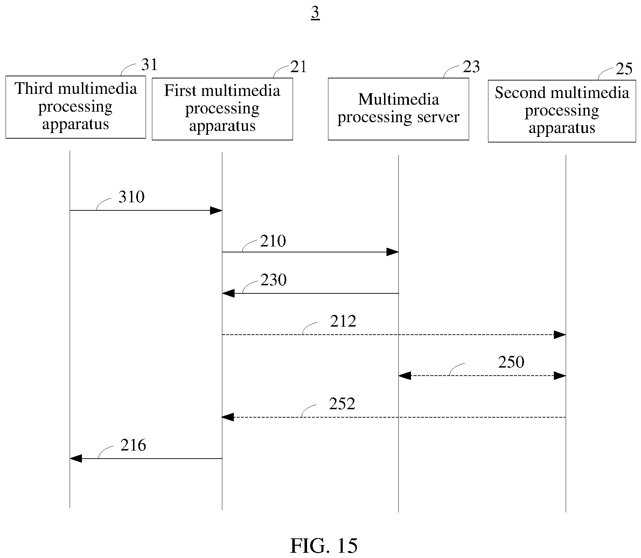

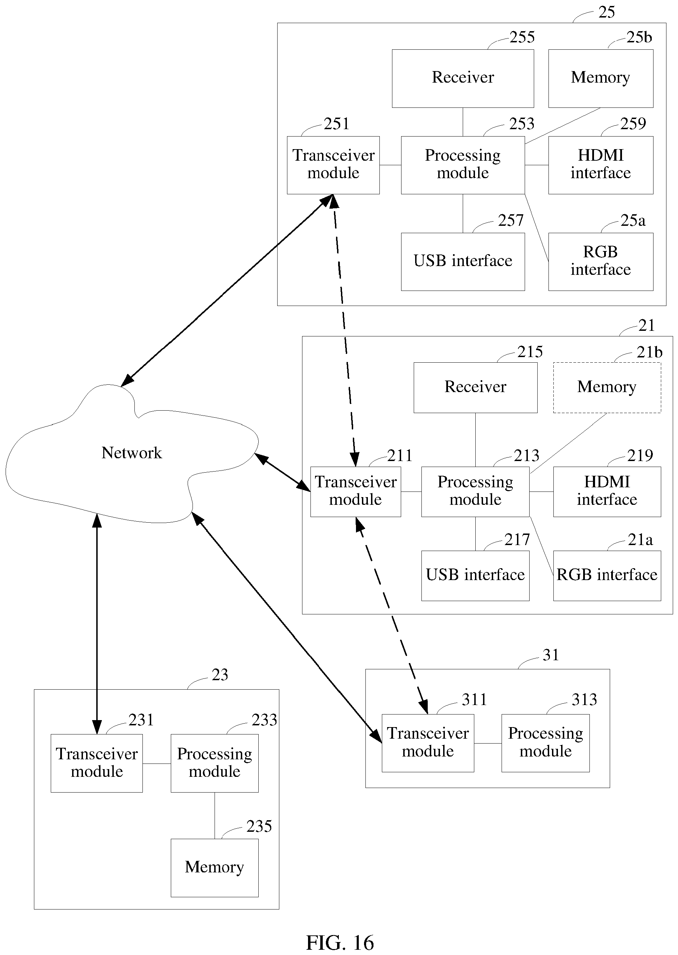

Refer to FIG. 15, which shows a flowchart of signaling of a multimedia system 3 according to a fifth embodiment . The multimedia system 3 includes a third multimedia processing apparatus 31, a first multimedia processing apparatus 21, a multimedia processing server 23, and a second multimedia processing apparatus 25. The third multimedia processing apparatus 31, the first multimedia processing apparatus 21, the multimedia processing server 23, and the second multimedia processing apparatus 25 may be connected to each other by means of the Internet, to receive data from each other or send data to each other. Further referring to FIG. 16, FIG. 16 shows a schematic structural diagram of the multimedia system 3. Structures of the first multimedia processing apparatus 21, the second multimedia processing apparatus 25, and the multimedia processing server 23 are similar to those of the first multimedia processing apparatus 21, the second multimedia processing apparatus 25, and the multimedia processing server 23 mentioned in the third embodiment, and details are not described herein again. The third multimedia processing apparatus 31 includes a transceiver module 311 and a processing module 313. Functions of the transceiver module 311 and the processing module 313 are described in detail below.

The following continues to describe functions of the third multimedia processing apparatus 31, the first multimedia processing apparatus 21, the multimedia processing server 23, the second multimedia processing apparatus 25 and modules thereof in the multimedia system 3. To make this embodiment more easily comprehensible, the following provides a description by using a hybrid video system as an example. That is, the hybrid video system may be considered as the multimedia system 3, the third multimedia processing apparatus 31 may be considered as an OTT client in the hybrid video system, the first multimedia processing apparatus 21 may be considered as a non-PVR STB in the hybrid video system, the multimedia processing server 23 may be considered as a server in the hybrid video system, and stores at least video content or a program, and the second multimedia processing apparatus 25 may be considered as a PVR STB in the hybrid video system. It should be noted that, the second multimedia processing apparatus 25 supports a Wake-on-LAN (Wake on LAN, WOL) function, and various standby modes of the second multimedia processing apparatus 25 are basically the same as those of the multimedia processing apparatus 11 in the first embodiment, and details are not described herein again.

In this embodiment, the third multimedia processing apparatus 31 cannot support Wake-on-LAN. Therefore, this embodiment is mainly focused on how the third multimedia processing apparatus 31 wakes up the second multimedia processing apparatus 25 by using the first multimedia processing apparatus 21 and by means of a network, so that the second multimedia processing apparatus 25 executes a task from the third multimedia processing apparatus 31.

As shown in FIG. 15, the transceiver module 311 of the third multimedia processing apparatus 31 sends a task creation message 310 to the first multimedia processing apparatus 21. After a transceiver module 211 of the first multimedia processing apparatus 21 receives the task creation message 310, the transceiver module 211 of the first multimedia processing apparatus 21 sends a status acquiring request 210 to the multimedia processing server 23, to request a status of the second multimedia processing apparatus 25 from the multimedia processing server 23. After a transceiver module 231 of the multimedia processing server 23 receives the request 210, a processing module 233 of the multimedia processing server 23 sends status information 230 of the second multimedia processing apparatus 25 to the first multimedia processing apparatus 21 by using the transceiver module 231.

After the transceiver module 211 of the first multimedia processing apparatus 21 receives the status information 230, a processing module 213 obtains a current status of the second multimedia processing apparatus 25 from the status information 230. If the current status is that the second multimedia processing apparatus 25 and the multimedia processing server 23 are in a network disconnection state, the processing module 213 obtains a wake time of the second multimedia processing apparatus 25 from the status information 230, and further determines a relative relationship between an execution time of a task that the second multimedia processing apparatus 25 is desired to execute and the wake time. If the relative relationship is that the execution time is earlier than or equal to the wake time, the transceiver module 211 of the first multimedia processing apparatus 21 sends a Wake-on-LAN message 212 to the second multimedia processing apparatus 25, to wake up the second multimedia processing apparatus 25 by means of a Wake-on-LAN function. After a transceiver module 251 of the second multimedia processing apparatus 25 receives the Wake-on-LAN message 212, a processing module 253 connects to the multimedia processing server 23 based on the Wake-on-LAN message 212 and by using the transceiver module 251, and executes an authentication program 250 to the multimedia processing server 23. After the authentication program 250 is executed, the transceiver module 251 of the second multimedia processing apparatus 25 sends a woken message 252 to the first multimedia processing apparatus 21. After the woken message 252 is received, the transceiver module 211 of the first multimedia processing apparatus 21 sends a task acknowledgement message 216 to the third multimedia processing apparatus 31 based on the woken message 252, to notify the third multimedia processing apparatus 31 that the task is to be created in a remote task list.

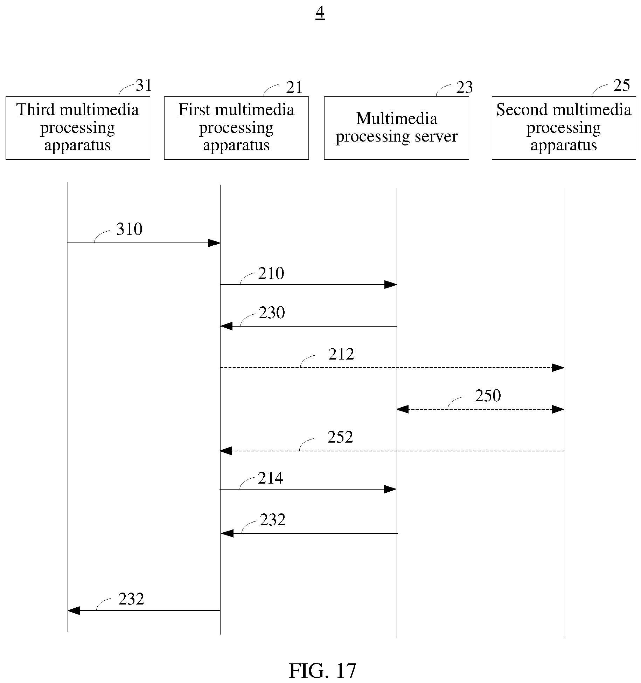

For another example of this embodiment, refer to FIG. 17, which shows a flowchart of signaling of a multimedia system 4. In the example, a third multimedia processing apparatus 31 may be considered as an OTT client in a hybrid video system, a first multimedia processing apparatus 21 may be considered as a non-PVR STB in the hybrid video system, a multimedia processing server 23 may be considered as a server in the hybrid video system, and stores at least video content or a program, and a second multimedia processing apparatus 25 may be considered as a PVR STB in the hybrid video system. In addition, the third multimedia processing apparatus 31 cannot support Wake-on-LAN. Therefore, this embodiment is mainly focused on how the third multimedia processing apparatus 31 wakes up the second multimedia processing apparatus 25 by using the first multimedia processing apparatus 21 and by means of a network, so that the second multimedia processing apparatus 25 executes a task from the third multimedia processing apparatus 31.

As shown in FIG. 17, a transceiver module 311 of the third multimedia processing apparatus 31 sends a task creation message 310 to the first multimedia processing apparatus 21. After a transceiver module 211 of the first multimedia processing apparatus 21 receives the task creation message 310, the transceiver module 211 of the first multimedia processing apparatus 21 sends a request 210 to the multimedia processing server 23, to request a status of the second multimedia processing apparatus 25 from the multimedia processing server 23. After a transceiver module 231 of the multimedia processing server 23 receives the request 210, a processing module 233 of the multimedia processing server 23 sends status information 230 of the second multimedia processing apparatus 25 to the first multimedia processing apparatus 21 by using the transceiver module 231.

After the transceiver module 211 of the first multimedia processing apparatus 21 receives the status information 230, a processing module 213 obtains a current status of the second multimedia processing apparatus 25 from the status information 230. If the current status is that the second multimedia processing apparatus 25 and the multimedia processing server 23 are in a network disconnection state, the processing module 213 obtains a wake time of the second multimedia processing apparatus 25 from the status information 230, and further determines a relative relationship between an execution time of a task that the second multimedia processing apparatus 25 is desired to execute and the wake time. If the relative relationship is that the execution time is earlier than or equal to the wake time, the transceiver module 211 of the first multimedia processing apparatus 21 sends a Wake-on-LAN message 212 to the second multimedia processing apparatus 25, to wake up the second multimedia processing apparatus 25 by means of a Wake-on-LAN function. After a transceiver module 251 of the second multimedia processing apparatus 25 receives the Wake-on-LAN message 212, a processing module 253 connects to the multimedia processing server 23 based on the Wake-on-LAN message 212 and by using the transceiver module 251, and executes an authentication program 250 to the multimedia processing server 23.

After the authentication program 250 is executed, the transceiver module 251 of the second multimedia processing apparatus 25 sends a woken message 252 to the first multimedia processing apparatus 21. After the woken message 252 is received, the transceiver module 211 of the first multimedia processing apparatus 21 sends a task creation message 214 to the multimedia processing server 23 based on the woken message 252. After the transceiver module 231 of the multimedia processing server 23 receives the task creation message 214, the processing module 233 creates a task in a remote task list according to the task creation message 214. The transceiver module 231 sends a task acknowledgement message 232 to the first multimedia processing apparatus 21. The first multimedia processing apparatus 21 also sends the task acknowledgement message 232 to the third multimedia processing apparatus 31, to notify the third multimedia processing apparatus 31 that the task is already created in the remote task list. After acquiring the remote task list from the multimedia processing server 23, the second multimedia processing apparatus 25 may wake up and then execute the task.

In conclusion, when the second multimedia processing apparatus 25 is in a network standby mode, if desiring the second multimedia processing apparatus 25 to execute a task, the third multimedia processing apparatus 31 in the implementation may wake up the second multimedia processing apparatus 25 by using the first multimedia processing apparatus 21 and by means of a network. After waking up the second multimedia processing apparatus 25 by means of a network, the first multimedia processing apparatus 21 may create the task that the third multimedia processing apparatus 31 intends to execute, in the multimedia processing server 23, to form a remote task list. The second multimedia processing apparatus 25 may acquire the remote task list from the multimedia processing server 23, and wake up according to an execution time of the task, to execute the task that the third multimedia processing apparatus 31 intends to execute. More specifically, by means of the multimedia system 3 in this embodiment, even if the second multimedia processing apparatus 25 enters a network standby mode, the third multimedia processing apparatus 31 can still enable, by using a created remote task, the second multimedia processing apparatus 25 to still normally execute a task that the third multimedia processing apparatus 31 intends to execute, so that an entire operation of the multimedia system 3 is more efficient.

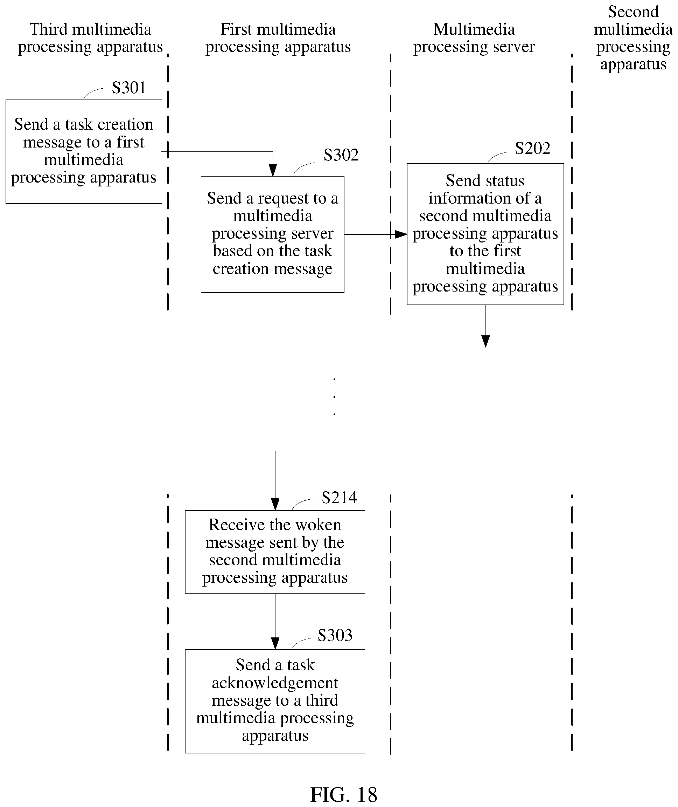

Refer to FIG. 18, which shows a flowchart of a multimedia processing method according to a sixth embodiment. The multimedia processing method may be applied to the multimedia system 3 (that is, a first multimedia processing apparatus is the first multimedia processing apparatus 21, a multimedia processing server is the multimedia processing server 23, a second multimedia processing apparatus is the second multimedia processing apparatus 25, and a third multimedia processing apparatus is the third multimedia processing apparatus 31) described in the fifth embodiment. To understand this embodiment, refer to the fifth embodiment, but the fifth embodiment is not intended to limit the implementation scope of this embodiment. In addition, steps of this embodiment are similar to those of the fourth embodiment to great extent. To understand this embodiment, refer to the fourth embodiment. Steps that are the same as those of the fourth embodiment are not described herein again.

In this embodiment, the third multimedia processing apparatus cannot support Wake-on-LAN. Therefore, this embodiment is mainly focused on how the third multimedia processing apparatus wakes up the second multimedia processing apparatus by using the first multimedia processing apparatus and by means of a network, so that the second multimedia processing apparatus executes a task from the third multimedia processing apparatus. First, in step S301, the third multimedia processing apparatus sends a task creation message to the first multimedia processing apparatus. In step S302, the first multimedia processing apparatus receives the task creation message, and requests, based on the task creation message, the multimedia processing server to send status information of the second multimedia processing apparatus.

Specifically, after receiving the task creation message, the first multimedia processing apparatus may consider a task of the third multimedia processing apparatus as a task of the first multimedia processing apparatus. To determine whether the second multimedia processing apparatus can execute the task from the third multimedia processing apparatus, as described in the fourth embodiment, a status of the second multimedia processing apparatus needs to be known. Step S202 to step S214 after step S302 are already described in the fourth embodiment, and details are not described herein again. In step S214, the first multimedia processing apparatus already receives the woken message from the second multimedia processing apparatus, which represents that the task of the third multimedia processing apparatus may be created in the multimedia processing server, and the second multimedia processing apparatus may execute the task. Therefore, in step S303, the first multimedia processing apparatus sends a task acknowledgement message to the third multimedia processing apparatus, to notify the third multimedia processing apparatus that the task of the third multimedia processing apparatus is to be executed by the second multimedia processing apparatus.

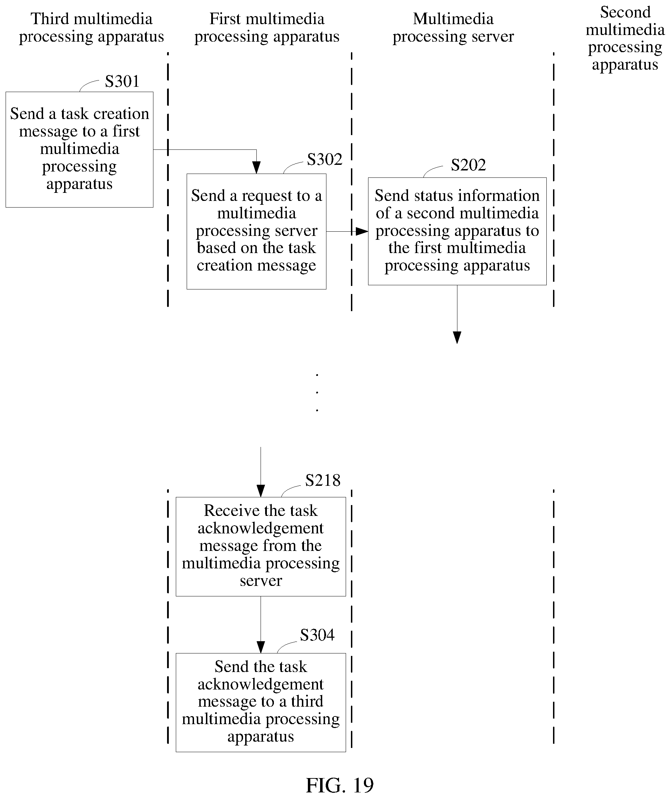

For another example of this embodiment, refer to FIG. 19, which shows another flowchart of a structural diagram of a multimedia processing method. Step S301 and step S302 of the multimedia processing method are described above. Step S202 to step S218 are already described in the fourth embodiment, and details are not described herein again. In step S218, the first multimedia processing apparatus already receives a task acknowledgement message from the multimedia server, which represents that the task of the third multimedia processing apparatus may be created in the multimedia processing server, and the second multimedia processing apparatus may execute the task. Therefore, in step S304, the first multimedia processing apparatus sends the task acknowledgement message to the third multimedia processing apparatus, to notify the third multimedia processing apparatus that the task of the third multimedia processing apparatus is to be executed by the second multimedia processing apparatus.

In conclusion, when the second multimedia processing apparatus is in a network standby mode, by means of the multimedia processing method in the implementation, if desiring the second multimedia processing apparatus to execute a task, the third multimedia processing apparatus may wake up the second multimedia processing apparatus by using the first multimedia processing apparatus and by means of a network. After waking up the second multimedia processing apparatus by means of a network, the first multimedia processing apparatus may create the task that the third multimedia processing apparatus intends to execute, in the multimedia processing server, to form a remote task list. The second multimedia processing apparatus may acquire the remote task list from the multimedia processing server, and wakes up according to an execution time of the task, to execute the task that the third multimedia processing apparatus intends to execute. More specifically, by means of the multimedia processing method in this embodiment, even if the second multimedia processing apparatus enters a network standby mode, the third multimedia processing apparatus can still enable, by using a created remote task, the second multimedia processing apparatus to still normally execute a task that the third multimedia processing apparatus intends to execute, so that an entire operation of a multimedia system is more efficient.

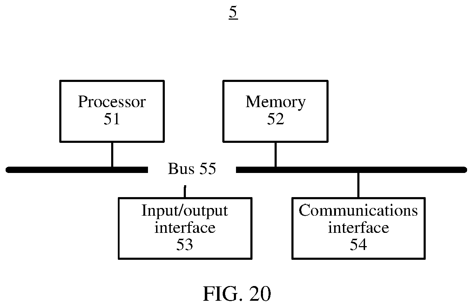

FIG. 20 is a schematic structural diagram of hardware of a multimedia processing apparatus 5 according to an embodiment. As shown in FIG. 20, the multimedia processing apparatus 5 includes a processor 51, a memory 52, an input/output interface 53, a communications interface 54, and a bus 55. The processor 51, the memory 52, the input/output interface 53, and the communications interface 54 communicate with each other by using the bus 55.

The processor 51 may be a general central processing unit (Central Processing Unit, CPU), a microprocessor, an application-specific integrated circuit (Application Specific Integrated Circuit, ASIC), or one or more integrated circuits, and is configured to execute a related program, so as to implement a technical solution provided in this embodiment.

The memory 52 may be a read-only memory (Read Only Memory, ROM), a static storage device, a dynamic storage device, or a random access memory (Random Access Memory, RAM). The memory 52 may store an operating system and another application program. When the technical solution provided in this is implemented by using software or firmware, program code for implementing the technical solution provided in this embodiment uf is stored in the memory 52, and is executed by the processor 51.

The input/output interface 53 is configured to receive data and information that are input and output data such as an operation result.

The communications interface 54 implements communication between the multimedia processing apparatus 5 and another device or a communications network by using a transceiver apparatus, for example but not limited to, a transceiver or a transceiver module.

The bus 55 may include a channel, to transfer information between components (for example, the processor 51, the memory 52, the input/output interface 53, and the communications interface 54) of the multimedia processing apparatus 5.

It should be noted that, although the multimedia processing apparatus 5 shown in FIG. 20 merely shows the processor 51, the memory 52, the input/output interface 53, the communications interface 54, and the bus 55, in a specific implementation process, a person skilled in the art should understand that, the multimedia processing apparatus 5 further includes another component required for normal running. Meanwhile, according to a specific need, a person skilled in the art should understand that, the multimedia processing apparatus 5 may further include a hardware component for implementing another additional function. In addition, a person skilled in the art should understand that, the multimedia processing apparatus 5 may include only a component or module required for implementing this embodiment, and does not necessarily include all components shown in FIG. 20.

A hardware structure shown in FIG. 20 and the above description are applicable to various multimedia processing apparatuses and multimedia processing servers provided in the embodiments.

A person of ordinary skill in the art may understand that all or some of the processes of the methods in the embodiments may be implemented by a computer program instructing relevant hardware. The program may be stored in a computer-readable memory medium. When the program runs, the processes of the methods in the embodiments are performed. The foregoing memory medium may be a magnetic disk, an optical disc, a read-only memory (ROM: Read-Only Memory), a random access memory (RAM: Random Access Memory), or the like.

## Claims

1. A multimedia processing method applied to a multimedia processing system, the multimedia processing system comprising a multimedia processing apparatus (11) and multimedia processing server (13), wherein the method comprises the following steps performed by the multimedia processing apparatus:
sending a management information request (112) to the multimedia processing server (13);
sending a task list request (114) to the multimedia processing server (13);
receiving management information (132) and a remote task list (134) comprising at least one task, each task having an associated start time from a multimedia processing server (13); and
calculating a wake time (116) of the multimedia processing apparatus (11) according to the management information (132), the remote task list (134), and a local task list comprising at least one task having an associated start time that is stored on the multimedia processing apparatus;
wherein the management information (132) comprises a prestart interval, and wherein the calculating a wake time comprises modifying the start time of a task based on the prestart interval;
sending the wake time (116) to the multimedia processing server (13);
receiving an adjusted wake time (136) from the multimedia processing server (13), wherein the adjusted wake time (136) is generated by the multimedia processing server according the number of multimedia processing apparatus (11) that are connected to the multimedia processing server (13) wherein the wake time is adjusted if it is determined by the multimedia processing server that load of a time slot in which the wake time is located exceeds the load of the multimedia processing server, wherein the time slot is included in the management information; and
waking up at the adjusted wake time (136) and executing a task in the remote task list (134).

2. A multimedia processing method applied to a multimedia processing server (13), wherein the method comprises:
sending management information (132), wherein the management information (132) comprises a prestart interval;
sending a remote task list (134), wherein the remote task list comprises at least one task, each task having an associated start time;
receiving a wake time (116) from a
multimedia processing apparatus (11), wherein the wake time (116) is calculated by the multimedia processing apparatus (11) according to the management information (132), the remote task list (134), a local task list comprising at least one task having an associated start time, and the prestart interval that is stored on the multimedia processing apparatus, and wherein the wake time is calculated by modifying the start time of a task based on the prestart interval;
generating an adjusted wake time (136) according to the number of multimedia processing apparatus (11) that are connected to the multimedia processing server (13) at a given time; and
sending the adjusted wake time (136) to the multimedia processing apparatus (11), so that the multimedia processing apparatus (11) wakes up at the adjusted wake time (136);
wherein the management information (132) comprises a time slot set and the adjusting step comprises:
acquiring, from the time slot set, a time slot corresponding to the wake time (116);
determining whether a quantity of multimedia processing apparatuses (11) that wake up within the time slot is greater than or equal to an upper-limit quantity of the multimedia processing server (13); and
if the quantity of the multimedia processing apparatuses (11) is greater than or equal to an upper-limit quantity of the multimedia processing server (13), generating the adjusted wake time (136).

3. A multimedia processing apparatus (11), comprising:
a transceiver module, configured to: send a management information request (112) to a multimedia processing server (13), send a task list request (114) to the multimedia processing server (13), receive management information (132) and a remote task list (134) comprising at least one task, each task having an associated start time from a multimedia processing server (13); and
a processing module, configured to calculate a wake time (116) of the multimedia processing apparatus (11) according to the management information (132) the remote task list (134) and a local task list comprising at least one task having an associated start time that is stored on the multimedia processing apparatus;
wherein the management information (132) comprises a prestart interval, and wherein the processing module is configured to calculate the wake time by modifying the start time of a task based on the prestart interval;
the transceiver module is further configured to send the wake time (116) to the multimedia processing server (13);
the transceiver module is further configured to receive an adjusted wake time (136) from the multimedia processing server (13), wherein the adjusted wake time (136) is generated by the multimedia processing server (13) according to the number of multimedia processing apparatus (11) that are connected to the multimedia processing server (13) at a given time, wherein the wake time is adjusted if it is determined by the multimedia processing server that load of a time slot in which the wake time is located exceeds the load of the multimedia processing server, wherein the time slot is included in the management information; and
the processing module is further configured to wake up at the adjusted wake time (136) and execute a task in the remote task list (134).

4. A multimedia processing server (13), comprising:
a transceiver module, configured to: send management information (132) based on a management information request (112) of a multimedia processing apparatus (11), wherein the management information (132) comprises a prestart interval; send a remote task list (134) based on a task list request (114) of the multimedia processing apparatus (11); and receive a wake time (116) from the multimedia processing apparatus (11), wherein the wake time (116) is calculated by the multimedia processing apparatus (11) according to the management information (132), the remote task list (134), a local task list comprising at least one task having an associated start time, and the prestart interval that is stored on the multimedia processing apparatus, and wherein the wake time is calculated by modifying the start time of a task based on the prestart interval; and
a processing module, configured to generate an adjusted wake time according to the number of multimedia processing apparatus (11) that are connected to the multimedia processing server (13) at a given time, wherein
the transceiver module is further configured to send the adjusted wake time (136) to the multimedia processing apparatus (11), so that the multimedia processing apparatus (11) wakes up at the adjusted wake time (136);
wherein the management information (132) comprises a time slot set and the processing module is further configured to:
acquire, from the time slot set, a time slot corresponding to the wake time (116);
determine whether a quantity of multimedia processing apparatuses (11) that wake up within the time slot is greater than or equal to an upper-limit quantity of the multimedia processing server (13); and
if the quantity of the multimedia processing apparatuses (11) is greater than or equal to the upper-limit quantity of the multimedia processing server (13), adjust the wake time (116) to generate the adjusted wake time (136).

## Patentansprüche

1. Multimedia-Verarbeitungsverfahren, das auf ein Multimedia-Verarbeitungssystem angewendet wird, wobei das Multimedia-Verarbeitungssystem eine Multimedia-Verarbeitungsvorrichtung (11) und einen Multimedia-Verarbeitungsserver (13) umfasst, wobei das Verfahren die folgenden Schritte umfasst, die von der Multimedia-Verarbeitungsvorrichtung ausgeführt werden:
Senden einer Verwaltungsinformationsanforderung (112) an den Multimedia-Verarbeitungsserver (13);
Senden einer Aufgabenlistenanforderung (114) an den Multimedia-Verarbeitungsserver (13);
Empfangen von Verwaltungsinformationen (132) und einer entfernten Aufgabenliste (134), die mindestens eine Aufgabe umfasst, wobei jede Aufgabe eine zugeordnete Startzeit von einem Multimedia-Verarbeitungsserver (13) aufweist; und
Berechnen einer Weckzeit (116) der Multimedia-Verarbeitungsvorrichtung (11) gemäß den Verwaltungsinformationen (132), der entfernten Aufgabenliste (134) und
einer lokalen Aufgabenliste, die mindestens eine Aufgabe mit einer zugeordneten Startzeit umfasst, die auf der Multimedia-Verarbeitungsvorrichtung gespeichert ist;
wobei die Verwaltungsinformationen (132) ein Vorstartintervall umfassen, und wobei das Berechnen einer Weckzeit das Ändern der Startzeit einer Aufgabe basierend auf dem Vorstartintervall umfasst;
Senden der Weckzeit (116) an den Multimedia-Verarbeitungsserver (13);
Empfangen einer angepassten Weckzeit (136) von dem Multimedia-Verarbeitungsserver (13), wobei die angepasste Weckzeit (136) von dem Multimedia-Verarbeitungsserver gemäß der Anzahl der Multimedia-Verarbeitungsvorrichtungen (11) erzeugt wird, die mit dem Multimedia-Verarbeitungsserver (13) verbunden sind, wobei die Weckzeit angepasst wird, wenn vom Multimedia-Verarbeitungsserver bestimmt wird, dass die Last eines Zeitschlitzes, in dem sich die Weckzeit befindet, die Last des Multimedia-Verarbeitungsservers übersteigt, wobei der Zeitschlitz in den Verwaltungsinformationen beinhaltet ist; und
Aufwachen zu der angepassten Weckzeit (136) und Ausführen einer Aufgabe in der entfernten Aufgabenliste (134).

2. Multimedia-Verarbeitungsverfahren, das auf einen Multimedia-Verarbeitungsserver (13) angewendet wird, wobei das Verfahren umfasst:
Senden von Verwaltungsinformationen (132), wobei die Verwaltungsinformationen (132) ein Vorstartintervall umfassen;
Senden einer entfernten Aufgabenliste (134), wobei die entfernte Aufgabenliste mindestens eine Aufgabe umfasst, wobei jeder Aufgabe eine zugeordnete Startzeit hat;
Empfangen einer Weckzeit (116) von einer Multimedia-Verarbeitungsvorrichtung (11), wobei die Weckzeit (116) von der Multimedia-Verarbeitungsvorrichtung (11) gemäß den Verwaltungsinformationen (132), der entfernten Aufgabenliste (134), einer lokalen Aufgabenliste, die mindestens eine Aufgabe mit einer zugeordneten Startzeit umfasst, und dem Vorstartintervall, das auf der Multimedia-Verarbeitungsvorrichtung gespeichert ist, berechnet wird, und wobei die Weckzeit berechnet wird, indem die Startzeit einer Aufgabe basierend auf dem Vorstartintervall geändert wird;
Erzeugen einer angepassten Weckzeit (136) gemäß der Anzahl der Multimedia-Verarbeitungsvorrichtungen (11), die zu einem gegebenen Zeitpunkt mit dem Multimedia-Verarbeitungsserver (13) verbunden sind; und
Senden der angepassten Weckzeit (136) an die Multimedia-Verarbeitungsvorrichtung (11), so dass die Multimedia-Verarbeitungsvorrichtung (11) zur angepassten Weckzeit (136) aufwacht;
wobei die Verwaltungsinformationen (132) einen Zeitschlitzsatz umfassen und der Anpassungsschritt umfasst:
Erfassen eines Zeitschlitzes, der der Weckzeit (116) entspricht, aus dem Zeitschlitzsatz;
Bestimmen, ob eine Menge von Multimedia-Verarbeitungsvorrichtungen (11), die innerhalb des Zeitschlitzes aufwachen, größer oder gleich einer Obergrenzenmenge des Multimedia-Verarbeitungsservers (13) ist; und
wenn die Menge der Multimedia-Verarbeitungsvorrichtungen (11) größer oder gleich einer Obergrenzenmenge des Multimedia-Verarbeitungsservers (13) ist, Erzeugen der angepassten Weckzeit (136).

3. Multimedia-Verarbeitungsvorrichtung (11), umfassend:
ein Transceiver-Modul, das dazu konfiguriert ist: eine Verwaltungsinformationsanforderung (112) an einen Multimedia-Verarbeitungsserver (13) zu senden, eine Aufgabenlistenanforderung (114) an den Multimedia-Verarbeitungsserver (13) zu senden, Verwaltungsinformationen (132) und eine entfernte Aufgabenliste (134) zu empfangen, die mindestens eine Aufgabe umfasst, wobei jede Aufgabe eine zugeordnete Startzeit von einem Multimedia-Verarbeitungsserver (13) aufweist; und
ein Verarbeitungsmodul, das dazu konfiguriert ist, eine Weckzeit (116) der Multimedia-Verarbeitungsvorrichtung (11) gemäß den Verwaltungsinformationen (132), der entfernten Aufgabenliste (134) und einer lokalen Aufgabenliste zu berechnen, die mindestens eine Aufgabe mit einer zugeordneten Startzeit umfasst, die auf der Multimedia-Verarbeitungsvorrichtung gespeichert ist;
wobei die Verwaltungsinformationen (132) ein Vorstartintervall umfassen und wobei das Verarbeitungsmodul dazu konfiguriert ist, die Weckzeit zu berechnen, indem die Startzeit einer Aufgabe basierend auf dem Vorstartintervall geändert wird;
das Transceiver-Modul ferner dazu konfiguriert ist, die Weckzeit (116) an den Multimedia-Verarbeitungsserver (13) zu senden;
das Transceiver-Modul ferner dazu konfiguriert, eine angepasste Weckzeit (136) von dem Multimedia-Verarbeitungsserver (13) zu empfangen, wobei die angepasste Weckzeit (136) von dem Multimedia-Verarbeitungsserver (13) gemäß der Anzahl der Multimedia-Verarbeitungsvorrichtungen (11) erzeugt wird, die zu einem bestimmten Zeitpunkt mit dem Multimedia-Verarbeitungsserver (13) verbunden sind, wobei die Weckzeit angepasst wird, wenn vom Multimedia-Verarbeitungsserver bestimmt wird, dass die Last eines Zeitschlitzes, in dem sich die Weckzeit befindet, die Last des Multimedia-Verarbeitungsservers übersteigt, wobei der Zeitschlitz in den Verwaltungsinformationen beinhaltet ist; und
das Verarbeitungsmodul ferner dazu konfiguriert ist, zu der angepassten Weckzeit (136) aufzuwachen und eine Aufgabe in der entfernten Aufgabenliste (134) auszuführen.

4. Multimedia-Verarbeitungsserver (13), umfassend:
ein Transceiver-Modul, das dazu konfiguriert ist, Verwaltungsinformationen (132) basierend auf einer Verwaltungsinformationsanforderung (112) einer Multimedia-Verarbeitungsvorrichtung (11) zu senden, wobei die Verwaltungsinformationen (132) ein Vorstartintervall umfassen; eine entfernte Aufgabenliste (134) basierend auf einer Aufgabenlistenanforderung (114) der Multimedia-Verarbeitungsvorrichtung (11) zu senden; und eine Weckzeit (116) von der Multimedia-Verarbeitungsvorrichtung (11) zu empfangen, wobei die Weckzeit (116) von der Multimedia-Verarbeitungsvorrichtung (11) gemäß den Verwaltungsinformationen (132), der entfernten Aufgabenliste (134), einer lokalen Aufgabenliste, die mindestens eine Aufgabe mit einer zugeordneten Startzeit umfasst, und dem Vorstartintervall, das auf der Multimedia-Verarbeitungsvorrichtung gespeichert ist, berechnet wird, und wobei die Weckzeit berechnet wird, indem die Startzeit einer Aufgabe basierend auf dem Vorstartintervall geändert wird; und
ein Verarbeitungsmodul, das dazu konfiguriert ist, eine angepasste Weckzeit gemäß der Anzahl der Multimedia-Verarbeitungsvorrichtungen (11) zu erzeugen, die zu einem gegebenen Zeitpunkt mit dem Multimedia-Verarbeitungsserver (13) verbunden sind, wobei
das Transceiver-Modul ferner dazu konfiguriert ist, die angepasste Weckzeit (136) an die Multimedia-Verarbeitungsvorrichtung (11) zu senden, so dass die Multimedia-Verarbeitungsvorrichtung (11) zur angepassten Weckzeit (136) aufwacht;
wobei die Verwaltungsinformationen (132) einen Zeitschlitzsatz umfassen und das Verarbeitungsmodul ferner dazu konfiguriert ist:
einen Zeitschlitz, der der Weckzeit (116) entspricht, aus dem Zeitschlitzsatz zu erfassen;
zu bestimmen, ob eine Menge von Multimedia-Verarbeitungsvorrichtungen (11), die innerhalb des Zeitschlitzes aufwachen, größer oder gleich einer Obergrenzenmenge des Multimedia-Verarbeitungsservers (13) ist; und
wenn die Menge der Multimedia-Verarbeitungsvorrichtungen (11) größer oder gleich der Obergrenzenmenge des Multimedia-Verarbeitungsservers (13) ist, Anpassen der Weckzeit (116), um die angepasste Weckzeit (136) zu erzeugen.

## Revendications

1. Procédé de traitement multimédia appliqué à un système de traitement multimédia, le système de traitement multimédia comprenant un appareil de traitement multimédia (11) et un serveur de traitement multimédia (13), le procédé comprenant les étapes suivantes, réalisées par l'appareil de traitement multimédia, consistant à :
envoyer une demande d'informations de gestion (112) au serveur de traitement multimédia (13) ;
envoyer une demande de liste de tâches (114) au serveur de traitement multimédia (13) ;
recevoir, en provenance d'un serveur de traitement multimédia (13), des informations de gestion (132) et une liste de tâches distante (134) comprenant au moins une tâche, chaque tâche ayant une heure de démarrage associée ; et
calculer une heure de réveil (116) de l'appareil de traitement multimédia (11) selon les informations de gestion (132), la liste de tâches distante (134) et une liste de tâches locale qui comprend au moins une tâche ayant une heure de démarrage associée et qui est stockée sur l'appareil de traitement multimédia ;
les informations de gestion (132) comprenant un intervalle de prédémarrage, et le calcul d'une heure de réveil comprenant l'étape consistant à modifier l'heure de démarrage d'une tâche sur la base de l'intervalle de prédémarrage ;
envoyer l'heure de réveil (116) au serveur de traitement multimédia (13) ;
recevoir une heure de réveil réglée (136) en provenance du serveur de traitement multimédia (13), l'heure de réveil réglée (136) étant générée par le serveur de traitement multimédia selon le nombre d'appareils de traitement multimédia (11) qui sont connectés au serveur de traitement multimédia (13), l'heure de réveil étant réglée s'il est déterminé par le serveur de traitement multimédia qu'une charge d'un créneau horaire où se trouve l'heure de réveil dépasse la charge du serveur de traitement multimédia, le créneau horaire étant compris dans les informations de gestion ; et
se réveiller à l'heure de réveil réglée (136) et exécuter une tâche dans la liste des tâches distante (134).

2. Procédé de traitement multimédia appliqué à un serveur de traitement multimédia (13), le procédé comprenant les étapes consistant à :
envoyer des informations de gestion (132), les informations de gestion (132) comprenant un intervalle de prédémarrage ;
envoyer une liste de tâches distante (134), la liste de tâches distante comprenant au moins une tâche, chaque tâche ayant une heure de démarrage associée ;
recevoir une heure de réveil (116) en provenance d'un appareil de traitement multimédia (11), l'heure de réveil (116) étant calculée par l'appareil de traitement multimédia (11) selon les informations de gestion (132), la liste de tâches distante (134), une liste de tâches locale qui comprend au moins une tâche ayant une heure de démarrage associée et l'intervalle de prédémarrage et qui est stockée sur l'appareil de traitement multimédia, et l'heure de réveil étant calculée en modifiant l'heure de démarrage d'une tâche sur la base de l'intervalle de prédémarrage ;
générer une heure de réveil réglée (136) selon le nombre d'appareils de traitement multimédia (11) qui sont connectés au serveur de traitement multimédia (13) à une heure donnée ; et
envoyer l'heure de réveil réglée (136) à l'appareil de traitement multimédia (11), de sorte que l'appareil de traitement multimédia (11) se réveille à l'heure de réveil réglée (136) ;
les informations de gestion (132) comprenant un ensemble de créneaux horaires et l'étape de réglage comprenant les étapes consistant à :
acquérir, à partir de l'ensemble de créneaux horaires, un créneau horaire correspondant à l'heure de réveil (116) ;
déterminer si un nombre d'appareils de traitement multimédia (11) qui se réveillent dans le créneau horaire est supérieur ou égal à un nombre maximum du serveur de traitement multimédia (13) ; et
si le nombre d'appareils de traitement multimédia (11) est supérieur ou égal à un nombre maximum du serveur de traitement multimédia (13), générer l'heure de réveil réglée (136).

3. Appareil de traitement multimédia (11), comprenant :
un module émetteur-récepteur, configuré pour : envoyer une demande d'informations de gestion (112) à un serveur de traitement multimédia (13), envoyer une demande de liste de tâches (114) au serveur de traitement multimédia (13), et recevoir, en provenance d'un serveur de traitement multimédia (13), des informations de gestion (132) et une liste de tâches distante (134) comprenant au moins une tâche, chaque tâche ayant une heure de démarrage associée ; et
un module de traitement, configuré pour calculer une heure de réveil (116) de l'appareil de traitement multimédia (11) selon les informations de gestion (132), la liste de tâches distante (134) et une liste de tâches locale qui comprend au moins une tâche ayant une heure de démarrage associée et qui est stockée sur l'appareil de traitement multimédia ;
les informations de gestion (132) comprenant un intervalle de prédémarrage, et le module de traitement étant configuré pour calculer une heure de réveil en modifiant l'heure de démarrage d'une tâche sur la base de l'intervalle de prédémarrage ;
le module émetteur-récepteur étant en outre configuré pour envoyer l'heure de réveil (116) au serveur de traitement multimédia (13) ;
le module émetteur-récepteur étant en outre configuré pour recevoir une heure de réveil réglée (136) en provenance du serveur de traitement multimédia (13), l'heure de réveil réglée (136) étant générée par le serveur de traitement multimédia (13) selon le nombre d'appareils de traitement multimédia (11) qui sont connectés au serveur de traitement multimédia (13) à une heure donnée, l'heure de réveil étant réglée s'il est déterminé par le serveur de traitement multimédia qu'une charge d'un créneau horaire où se trouve l'heure de réveil dépasse la charge du serveur de traitement multimédia, le créneau horaire étant compris dans les informations de gestion ; et
le module de traitement étant en outre configuré pour se réveiller à l'heure de réveil réglée (136) et exécuter une tâche dans la liste des tâches distante (134).

4. Serveur de traitement multimédia (13), comprenant :
un module émetteur-récepteur, configuré pour : envoyer des informations de gestion (132) sur la base d'une demande d'informations de gestion (112) d'un appareil de traitement multimédia (11), les informations de gestion (132) comprenant un intervalle de prédémarrage ; envoyer une liste de tâches distante (134) sur la base d'une demande de liste de tâches (114) de l'appareil de traitement multimédia (11) ; et
recevoir une heure de réveil (116) en provenance de l'appareil de traitement multimédia (11), l'heure de réveil (116) étant calculée par l'appareil de traitement multimédia (11) selon les informations de gestion (132), la liste de tâches distante (134), une liste de tâches locale qui comprend au moins une tâche ayant une heure de démarrage associée et l'intervalle de prédémarrage et qui est stockée sur l'appareil de traitement multimédia, et l'heure de réveil étant calculée en modifiant l'heure de démarrage d'une tâche sur la base de l'intervalle de prédémarrage ; et
un module de traitement, configuré pour générer une heure de réveil réglée selon le nombre d'appareils de traitement multimédia (11) qui sont connectés au serveur de traitement multimédia (13) à une heure donnée ;
le module émetteur-récepteur étant en outre configuré pour envoyer l'heure de réveil réglée (136) à l'appareil de traitement multimédia (11), de sorte que l'appareil de traitement multimédia (11) se réveille à l'heure de réveil réglée (136) ;
les informations de gestion (132) comprenant un ensemble de créneaux horaires et le module de traitement étant en outre configuré pour :
acquérir, à partir de l'ensemble de créneaux horaires, un créneau horaire correspondant à l'heure de réveil (116) ;
déterminer si un nombre d'appareils de traitement multimédia (11) qui se réveillent dans le créneau horaire est supérieur ou égal à un nombre maximum du serveur de traitement multimédia (13) ; et
si le nombre d'appareils de traitement multimédia (11) est supérieur ou égal au nombre maximum du serveur de traitement multimédia (13), régler l'heure de réveil (116) pour générer l'heure de réveil réglée (136).
